# EUROPEAN PATENT APPLICATION

(11) **EP 3 842 393 A1**
(43) Date of publication of application: **30.06.2021**
(21) Application number: 19852994.3
(22) Date of filing: 15.08.2019
(51) Int. Cl.: C03B 37/083

(54) **BUSHING FOR MANUFACTURING GLASS FIBER, AND METHOD FOR MANUFACTURING GLASS FIBER**

(30) Priority: 20.08.2018 JP 2018154014; 16.05.2019 JP 2019092939
(71) Applicant: Central Glass Company, Limited, Ube-shi, Yamaguchi 755-0001 (JP)
(72) Inventor: FUJII, Tsuyoshi, Matsusaka-shi, Mie 515-0001 (JP); SAITO, Masanori, Matsusaka-shi, Mie 515-0001 (JP)
(74) Representative: Mewburn Ellis LLP
(86) International application number: PCT/JP2019/032035
(87) International publication number: WO 2020/040033

(57) **Abstract**

The bushing for producing glass fibers of the present disclosure includes a base plate; and nozzles arranged on the base plate and each configured to discharge glass melts. The base plate is provided with base orifices each having a horizontally flat cross section. Each of the nozzles is provided with a nozzle wall projecting from the base plate along an outline of a corresponding base orifice, and a nozzle orifice that penetrates the nozzle from the base orifice to a distal end of the nozzle wall while keeping the shape of the base orifice. The nozzle wall is provided with a pair of cutouts that do not project from the base plate. The cutouts oppose each other with a longitudinal center axis of the nozzle orifice in between. The width of each of the cutouts is 10% or more and 95% or less of the length of the longitudinal center axis of the nozzle orifice.

## Description

### TECHNICAL FIELD

The present disclosure relates to bushings for producing glass fibers and methods of producing glass fibers.

### BACKGROUND ART

Glass fibers whose cross section has a non-circular shape such as a flat shape have been widely used as a filler material as they can exhibit, when combined with a material such as a resin, a higher strength than glass fibers whose cross section is circular do and can prevent warpage of a resin composite molded product. This is presumably because glass fibers having a non-circular cross section easily stack each other and therefore increase the flowability of a resin when molded together with the resin, so that the resulting resin composite molded article has high dispersibility of the glass fibers even when the glass fiber content is high. Although being the same as the production process for glass fibers having a circular cross section, the production process for glass fibers having a non-circular cross section requires a bushing for producing glass fibers in which nozzles having a special structure are arranged (hereinafter, such a bushing is also referred to as a "nozzle plate") to draw glass melts from the nozzles as glass fibers having a non-circular cross section.

For example, Patent Literatures 1 to 3 each disclose a nozzle for producing glass fibers having a flat cross section, which includes nozzle tips and a nozzle plate. Each nozzle tip is provided with a nozzle wall formed by long side walls and short side walls and a cutout in a distal end portion of a long side wall. The nozzle plate includes the nozzle tips arranged therein. Production of a glass fiber having a flat cross section requires drawing of glass melts from a nozzle whose cross section is flat at the end from which the glass melts are discharged, and then quenching the glass melts for fiber formation. The key to produce a glass fiber having a flat cross section from glass melts is to reduce the tendency of the glass melts to become round due to their high surface tension.

According to Patent Literature 1, a cutout is formed in a distal end portion of one of the long side walls of each nozzle whose cross section is oval at the end from which glass melts are discharged. The cutout structure is used to increase the viscosity of the glass melts to counteract the tendency of the glass to become round while the structure without the cutout is used to maintain the temperature of the glass melts and thereby maintain the shape of the flowing glass melts. According to Patent Literature 2, nozzles each with a cutout in a distal end portion of one of its long side walls are inserted into a plate with the cutouts facing each other. According to Patent Literature 3, a wide cutout is formed in one or both of the long side walls of a flat nozzle, so that the viscosity of the glass melts flowing along the long side wall(s) of the nozzle is increased by cooling gas through the cutouts.

### CITATION LIST

### - Patent Literature

Patent Literature 1: WO 99/028543
Patent Literature 2: JP 2003-048742 A
Patent Literature 3: JP 2010-163342 A

### SUMMARY OF INVENTION

### - Technical Problem

In order to produce a large number of glass fibers, it is effective to use a bushing with a large number of nozzles on the base plate. Such a bushing with a large number of nozzles requires the base plate to have a large area. A large area of the base plate tends to cause temperature unevenness in the base plate, which may cause the flatness ratio and cross-sectional areas of glass fibers to vary, producing glass fibers with a larger variation of cross-sectional shapes. Specifically, when the temperature in the base plate is uneven, the glass melts flowing out from different nozzles have different viscosities. This means that the magnitudes of force against the tendency (surface tension) of the glass to become round are different at different nozzle outlets, and thus the flatness ratio of the resulting glass fibers vary. Also, the flow of the glass melts tends to pulsate inside a nozzle having a relatively low temperature, and thus the resulting glass fibers unfortunately tend to have a non-uniform cross-sectional shape.

In addition, when the drawn glass melts are bundled for drawing at a position corresponding to the center of a base plate having a large area, the angle at which the glass melts are drawn from a nozzle (hereinafter, such an angle is also referred to as a "glass fiber pulling angle") varies between nozzles in the center portion of the base plate and the nozzles at the ends of the base plate. This may cause the flatness ratio and cross-sectional areas of glass fibers to vary, producing glass fibers with a larger variation of cross-sectional shapes.

The existing nozzle shapes disclosed in Patent Literatures 1 to 3 may cause the flatness ratio and cross-sectional areas of glass fibers to vary due to the temperature unevenness in the base plate and the varying glass fiber pulling angles described above, producing glass fibers with a larger variation of cross-sectional shapes.

The present disclosure, in view of the above problems, aims to provide a bushing for producing glass fibers which enables production of glass fibers whose variation in cross-sectional shape due to the temperature unevenness in the base plate and the varying glass fiber pulling angles is small in drawing of glass fibers from a large number of nozzles for production of glass fibers having a flat cross section. The present disclosure also aims to provide a method of producing glass fibers symmetrical about a longitudinal central axis and having a flat cross section, using the bushing above. Moreover, the present disclosure aims to provide a method of producing a glass fiber strand including bundling glass fibers obtained by the production method above, and a glass fiber strand including bundled glass fibers whose variation in cross-sectional shape is small.

### - Solution to Problem

A bushing for producing glass fibers according to the first embodiment of the present disclosure includes: a base plate; and nozzles arranged on the base plate and each configured to discharge glass melts, the base plate being provided with base orifices each having a horizontally flat cross section, each of the nozzles being provided with a nozzle wall projecting from the base plate along an outline of a corresponding base orifice, and a nozzle orifice that penetrates the nozzle from the base orifice to a distal end of the nozzle wall while keeping a shape of the base orifice, the nozzle wall being provided with a pair of cutouts that do not project from the base plate, the cutouts opposing each other with a longitudinal center axis of the nozzle orifice in between, a width of each of the cutouts being 10% or more and 95% or less of a length of the longitudinal center axis of the nozzle orifice.

The bushing for producing glass fibers according to the second embodiment of the present disclosure includes: a base plate; and nozzles arranged on the base plate and each configured to discharge glass melts, the base plate being provided with base orifices each having a horizontally flat cross section, each of the nozzles being provided with a nozzle wall projecting from the base plate along an outline of a corresponding base orifice, and a nozzle orifice that penetrates the nozzle from the base orifice to a distal end of the nozzle wall while keeping a shape of the base orifice, the nozzle wall being provided with a pair of cutouts in distal end portions, the cutouts opposing each other with a longitudinal center axis of the nozzle orifice in between, a width of each of the cutouts being 10% or more and 95% or less of a length of the longitudinal center axis of the nozzle orifice, a height of each of the cutouts being more than 80% and less than 100% of a distance from the base plate to the distal end of the nozzle wall.

Hereinafter, the bushings for producing glass fibers according to the first embodiment and the second embodiment of the present disclosure are each simply referred to as "the bushing for producing glass fibers of the present disclosure" or "the bushing of the present disclosure" when no distinction is made therebetween.

In the bushing of the present disclosure, unlike the conventional structures with a cutout in one of the nozzle walls, a pair of cutouts is provided in the nozzle wall and the width of each of the cutouts is 10% or more and 95% or less of the length of the longitudinal center axis of the nozzle orifice. This enables production of glass fibers having a flat cross section.

Also, in the first embodiment, the nozzle wall is provided with a pair of cutouts that do not project from the base plate. In the second embodiment, the nozzle wall is provided with a pair of cutouts in distal end portions, and the height of each of the cutouts is more than 80% and less than 100% of the distance from the base plate to the distal end of the nozzle wall. This can reduce variation in cross-sectional shape (flatness ratio, cross-sectional area) of glass fibers due to the temperature unevenness in the base plate and the varying glass fiber pulling angles.

In the bushing of the present disclosure, the cutouts preferably oppose each other with the center of the longitudinal center axis of the nozzle orifice in between.

This can enhance the effect of the cutouts, facilitating production of glass fibers having a flat cross-sectional shape.

In the bushing of the present disclosure, a total area of the cutouts in terms of portions defined by an inner surface of the nozzle wall is preferably 1% or more and 80% or less of a total area of the inner surface of the nozzle wall including the total area of the cutouts.

The proportion of the area of the cutouts of 1% or more and 80% or less enhances the effect of the cutouts. A proportion of the area of the cutouts of less than 1% may not enhance the effect of the cutouts. A proportion of the area of the cutouts of more than 80% may reduce the stability of the flow of the glass melts inside the nozzle orifices, problematically causing the glass to pulsate or the like when the glass flows out.

In the bushing of the present disclosure, each of the cutouts preferably has a rectangular shape.

The rectangular shape of the cutouts facilitates processing of the nozzles. The rectangular shape of the cutouts also maximizes the effect of the cutouts of cooling the glass melts. The shape even stabilizes the flow of the glass melts, reducing defects such as pulsation when the glass flows out.

In the bushing of the present disclosure, the nozzle orifice preferably has a ratio (length of longitudinal center axis)/(length of the longest portion in a short-length direction) of 2 or more, specifically 2 or more and 12 or less.

The ratio of 2 or more and 12 or less facilitates production of flat glass fibers whose longer axis length and shorter axis length are different. A ratio of less than 2, meaning that the nozzle orifice has a more circular shape, brings difficulty in production of flat glass fibers. A ratio of more than 12, meaning that the longer axis is too long, reduces the number of nozzles arrangeable in the same area.

In the bushing of the present disclosure, a ratio B/A of a distance B from the base plate to the distal end of the nozzle wall to a thickness A of the base plate is preferably 0.2 or more and 4 or less, more preferably 0.2 or more and 3 or less, still more preferably 0.2 or more and 1 or less.

The ratio B/A of 0.2 or more and 4 or less can stabilize the flow of the glass melts, reducing defects such as pulsation when the glass flows out.

In the bushing of the present disclosure, a cross-sectional area of the base orifice is preferably the same as a cross-sectional area of an end of the nozzle orifice.

When the cross-sectional area of the base orifice and the cross-sectional area of the end of the nozzle orifice are the same, processing of nozzles is facilitated. Also, when the cross-sectional area of the base orifice and the cross-sectional area of the end of the nozzle orifice are the same, production of flat glass fibers is facilitated.

In the bushing of the present disclosure, a cross-sectional shape of the base orifice is preferably the same as a cross-sectional shape of the nozzle orifice.

When the cross-sectional shape of the base orifice and the cross-sectional shape of the nozzle orifice are the same, processing of nozzles is facilitated. Also, when the cross-sectional shape of the base orifice and the cross-sectional shape of the nozzle orifice are the same, production of flat glass fibers is facilitated.

A method of producing glass fibers of the present disclosure is a method of producing glass fibers each having a flat cross section symmetrical about a longitudinal center axis, the method including drawing glass melts from each of the nozzles of the bushing of the present disclosure, and quenching the glass melts for fiber formation.

The method of producing glass fibers of the present disclosure enables efficient production of glass fibers having a flat cross-sectional shape symmetrical about the longitudinal center axis.

A method of producing a glass fiber strand of the present disclosure includes obtaining glass fibers by the production method of the present disclosure, and bundling the glass fibers.

The method of producing a glass fiber strand of the present disclosure enables production of a glass fiber strand including bundled glass fibers having a uniform cross-sectional shape.

A glass fiber strand according to the first embodiment of the present disclosure includes bundled glass fibers each having a flat cross section symmetrical about a longitudinal center axis, wherein an average flatness ratio of cross-sectional shapes of the glass fibers is 2 or more and 8 or less and a standard deviation of the flatness ratio of the cross-sectional shapes of the glass fibers is 14% or less, preferably 12% or less, more preferably 10% or less.

The glass fiber strand according to the second embodiment of the present disclosure includes bundled glass fibers each having a flat cross section symmetrical about a longitudinal center axis, wherein a standard deviation of cross-sectional areas of the glass fibers is 14% or less, preferably 12% or less, more preferably 10% or less.

In the second embodiment, an average flatness ratio of cross-sectional shapes of the glass fibers is preferably 2 or more and 8 or less.

In the glass fiber strand of the present disclosure, the reduced variation in flatness ratio or cross-sectional area of the glass fibers enables reduction of variation in cross-sectional shape of the glass fibers.

### - Advantageous Effects of Invention

The present disclosure enables production of glass fibers having a flat cross section and a small variation in cross-sectional shape in terms of flatness ratio and cross-sectional area.

### BRIEF DESCRIPTION OF DRAWINGS

Fig. 1(a) is a side view schematically showing a device for producing glass fibers of one embodiment. Fig. 1(b) is an enlarged view of the vicinity of a bushing constituting the device for producing glass fibers shown in Fig. 1(a).
Fig. 2 is a bottom view schematically showing an example of arrangement of nozzles and cooling fins of a bushing constituting a device for producing glass fibers.
Fig. 3 is a bottom view schematically showing another example of arrangement of nozzles and cooling fins of a bushing constituting a device for producing glass fibers.
Fig. 4 is a perspective view schematically showing main parts of an example of the bushing according to the first embodiment of the present disclosure.
Fig. 5(a) is a cross-sectional view of the bushing shown in Fig. 4 in the lengthwise direction. Fig. 5(b) is a bottom view of a nozzle constituting the bushing shown in Fig. 4. Fig. 5(c) is a cross-sectional view of the bushing shown in Fig. 4 in the short length direction.
Fig. 6(a), Fig. 6(b), and Fig. 6(c) are each a bottom view of a nozzle constituting another example of the bushing according to the first embodiment of the present disclosure.
Fig. 7 is a perspective view schematically showing main parts of an example of a bushing according to the second embodiment of the present disclosure.
Fig. 8(a) is a cross-sectional view of the bushing shown in Fig. 7 in the lengthwise direction. Fig. 8(b) is a bottom view of a nozzle constituting the bushing shown in Fig. 7. Fig. 8(c) is a cross-sectional view of the bushing shown in Fig. 7 in the short length direction.
Fig. 9(a), Fig. 9(b), and Fig. 9(c) are each a bottom view of a nozzle constituting another example of the bushing according to the second embodiment of the present disclosure. Fig. 9(d), Fig. 9(e), and Fig. 9(f) are cross-sectional views of the bushings including the nozzles shown in Fig. 9(a), Fig. 9(b), and Fig. 9(c), respectively, in the short length direction.
Fig. 10(a), Fig. 10(b), and Fig. 10(c) are each a bottom view of another example of the nozzle constituting the bushing of the present disclosure.
Fig. 11 is a field emission scanning electron microscope photograph of cross sections of glass fibers in Example 1.
Fig. 12 is a field emission scanning electron microscope photograph of cross sections of glass fibers in Example 3.
Fig. 13 is a field emission scanning electron microscope photograph of cross sections of glass fibers in Example 4.
Fig. 14 is a field emission scanning electron microscope photograph of cross sections of glass fibers in Example 5.
Fig. 15 is a field emission scanning electron microscope photograph of cross sections of glass fibers in Example 19.

### DESCRIPTION OF EMBODIMENTS

Hereinafter, embodiments of the present disclosure are described in detail.

The present disclosure is not limited to the following embodiments, and may be suitably modified without departing from the gist of the present disclosure. Two or more preferred features described in the following embodiments may be combined.

The following embodiments are examples, and features of different embodiments can be partially exchanged or combined with each other. In the second embodiment and subsequent embodiments, a description of features common to the first embodiment is omitted, and only different points are described. In particular, similar advantageous effects by similar features are not mentioned in each embodiment.

### [Device for producing glass fibers]

A device for producing glass fibers including a bushing for producing glass fibers of the present disclosure is described with reference to the drawings.

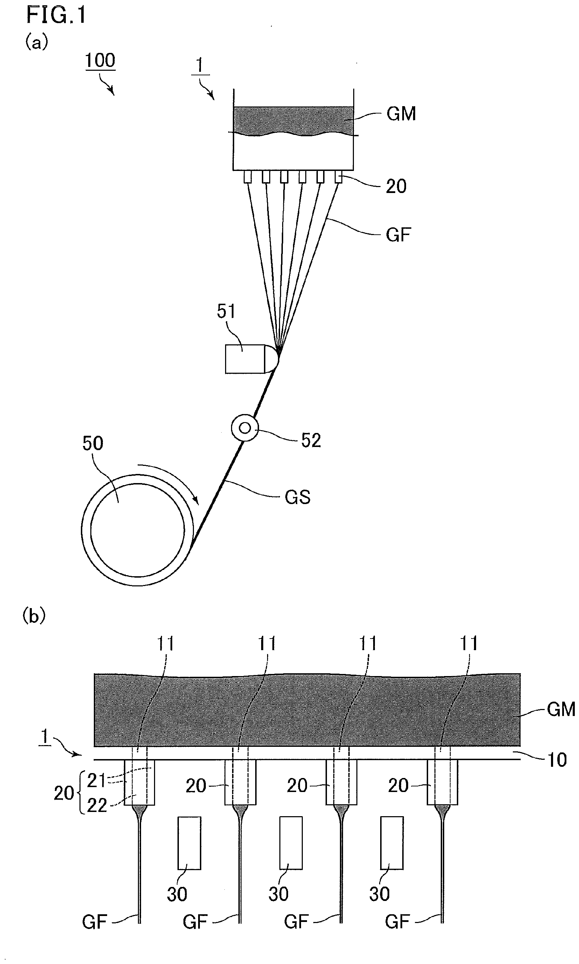

Fig. 1(a) is a side view schematically showing a device for producing glass fibers of one embodiment.

A device 100 for producing glass fibers shown in Fig. 1(a) includes a bushing 1 for producing glass fibers GF, an applicator 51 for applying a sizing agent to the glass fibers GF, a gathering shoe 52 for bundling the glass fibers GF to form a glass fiber strand GS, and a winder 50 for winding the glass fiber strand GS.

Fig. 1(b) is an enlarged view of the vicinity of a bushing constituting the device for producing glass fibers shown in Fig. 1(a).

The bushing 1 includes a base plate 10 and nozzles 20 each configured to discharge glass melts GM. The base plate 10 defines the bottom surface of a reservoir to hold the glass melts GM and provided with base orifices 11. The nozzles 20 are arranged on the base plate 10 and each provided with a nozzle wall 21 and a nozzle orifice 22. The glass melts GM are drawn through the base orifices 11 of the base plate 10 and the nozzle orifices 22 of the nozzles 20 and thereby the glass fibers GF are produced.

As shown in Fig. 1(b), cooling fins 30 to promote cooling of the glass fibers GF are preferably arranged. The cooling fins 30 can be known cooling fins for glass fiber drawing. The cooling fins may be made of, for example, a metal having a high thermal conductivity, such as copper, silver, gold, iron, nickel, chromium, platinum, rhodium, palladium, and an alloy containing any of these metals. In the case where cooling with the cooling fins is insufficient, a liquid such as water may be passed through the cooling fins to further promote cooling. The cooling fins may be arranged at any positions, and may be arranged with their upper ends opposing the nozzles.

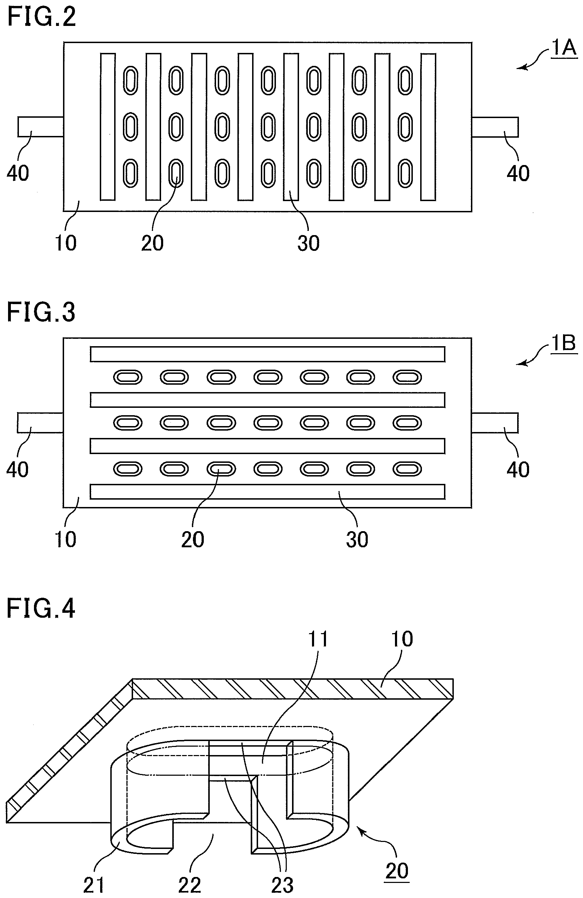

Fig. 2 is a bottom view schematically showing an example of arrangement of nozzles and cooling fins of a bushing constituting a device for producing glass fibers.

A bushing 1A shown in Fig. 2 includes the base plate 10, the nozzles 20 arranged on the base plate 10, and terminals 40 provided at the lengthwise ends of the base plate 10 to apply current for heating. In the bushing 1A shown in Fig. 2, the nozzles 20 and the cooling fins 30 are arranged perpendicular to the terminals 40.

Fig. 3 is a bottom view schematically showing another example of arrangement of nozzles and cooling fins of a bushing constituting a device for producing glass fibers.

In a bushing 1B shown in Fig. 3, the nozzles 20 and the cooling fins 30 are arranged parallel to the terminals 40.

### [Bushing for producing glass fibers]

The bushing of the present disclosure is described below.

The bushing of the present disclosure includes a base plate and nozzles arranged on the base plate and configured to discharge glass melts.

In the bushing of the present disclosure, the number of nozzles to be arranged on the base plate is not limited. A larger number of nozzles leads to a larger number of simultaneously producible glass fibers. Too large a number of nozzles, however, may cause defects such as non-uniform heat application to the nozzles. In these respects, the number of nozzles is preferably 30 or more and 5000 or less, more preferably 50 or more and 5000 or less.

In the bushing of the present disclosure, the base plate is provided with base orifices having a horizontally flat cross section, and each of the nozzles is provided with a nozzle wall projecting from the base plate along the outline of the corresponding base orifice, and a nozzle orifice that penetrates the nozzle from the base orifice to the distal end of the nozzle wall while keeping the shape of the base orifice.

A case is described where the base orifices and the nozzle orifices each have an oblong cross-sectional shape. The cross-sectional shape of the base orifices and the nozzles orifices in the bushing of the present disclosure is not limited to an oblong shape, and may be, for example, a rectangular shape, an oval shape, a trapezoidal shape, a gourd shape, a dumbbell shape, a triangular shape, or a shape similar to any of these shapes.

Herein, the expression "longitudinal center axis of a nozzle orifice" corresponds to the longer axis when the cross section is oblong.

The direction in which a nozzle wall projects from the base plate in the bushing of the present disclosure is not limited. For example, the nozzle wall may project in the direction perpendicular to the base plate or in a direction oblique to the base plate. The bushing of the present disclosure may include nozzles all projecting in the same direction from the base plate or may include nozzles projecting in different directions from the base plate.

The bushing of the present disclosure may include nozzles with nozzle walls of the same height or may include nozzles with nozzle walls of different heights. The height of a nozzle wall means the maximum distance from the base plate to the distal end of the nozzle wall. Also, in one nozzle, the distance from the base plate to the distal end of the nozzle wall may be constant or inconstant.

### (First embodiment)

In the bushing according to the first embodiment of the present disclosure, the nozzle walls are each provided with a pair of cutouts that do not project from the base plate.

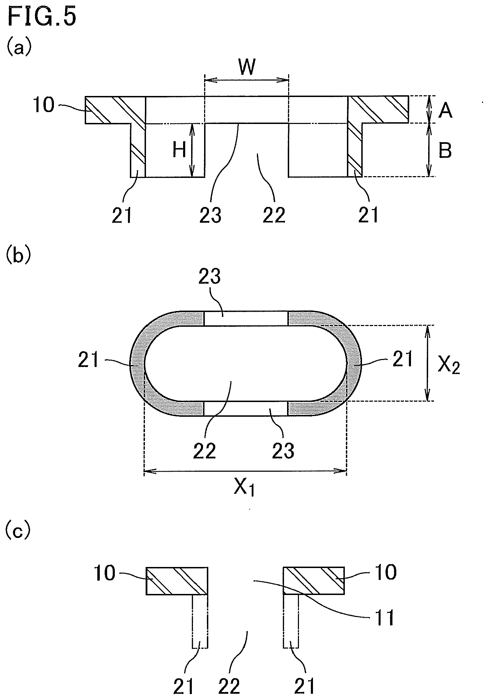

Fig. 4 is a perspective view schematically showing main parts of an example of the bushing according to the first embodiment of the present disclosure. Fig. 5(a) is a cross-sectional view of the bushing shown in Fig. 4 in the lengthwise direction. Fig. 5(b) is a bottom view of a nozzle constituting the bushing shown in Fig. 4. Fig. 5(c) is a cross-sectional view of the bushing shown in Fig. 4 in the short length direction.

As shown in Fig. 4, Fig. 5(a), Fig. 5(b) and Fig. 5(c), the base plate 10 is provided with the base orifices 11 having a horizontally flat cross section, and each of the nozzles 20 is provided with the nozzle wall 21 projecting from the base plate along the outline of the corresponding base orifice 11, and the nozzle orifice 22 that penetrates the nozzle 20 from the base orifice 11 to the distal end of the nozzle wall 21 while keeping the shape of the base orifice 11.

The nozzle wall 21 is provided with a pair of cutouts 23 that do not project from the base plate 10. The cutouts 23 oppose each other with the longitudinal center axis of the nozzle orifice 22 in between. The cutouts 23 each preferably have a rectangular shape in order to facilitate the processing in nozzle production.

In the bushing according to the first embodiment of the present disclosure, the width of each of the cutouts (the distance indicated by W in Fig. 5(a)) is 10% or more and 95% or less, preferably 15% or more and 95% or less, more preferably 20% or more and 90% or less, still more preferably 25% or more and 90% or less, of the length of the longitudinal center axis of the nozzle orifice (the distance indicated by X₁ in Fig. 5(b)). The width of the cutout may be 80% or less of the length of the longitudinal center axis of the nozzle orifice.

The width of a cutout means the maximum length of the cutout in the horizontal direction.

In the bushing according to the first embodiment of the present disclosure, the height of each of the cutouts (the distance indicated by H in Fig. 5(a)) may be the same as or different from the distance from the base plate to the distal end of the nozzle wall (the distance indicated by B in Fig. 5(a)).

The height of a cutout means the maximum length of the cutout in the vertical direction. The distance from the base plate to the distal end of the nozzle wall means the maximum distance from the base plate to the distal end of the nozzle wall in the vertical direction.

For example, the first embodiment of the present disclosure encompasses a structure in which the heights of the left and right nozzle walls 21 in Fig. 5(a) are different and a structure in which the nozzle walls 21 in Fig. 5(a) project in a direction oblique to the base plate 10, as long as each nozzle wall is provided with a pair of cutouts that do not project from the base plate.

In the bushing according to the first embodiment of the present disclosure, the pair of cutouts provided in each nozzle wall and not projecting from the base plate allows the air flowing along the surface of the base plate to come into direct contact with the glass flowing along the cutouts, maximizing the cooling effect of the flowing air. The provision of the pair of cutouts is preferred also because the area of the cutouts is increased and thereby the cooling effect of the cooling fins can be increased.

In the bushing according to the first embodiment of the present disclosure, end surfaces of each nozzle wall may each have an inclined surface with which the thickness of the nozzle wall decreases toward the cutouts as viewed from the bottom surface of the nozzle.

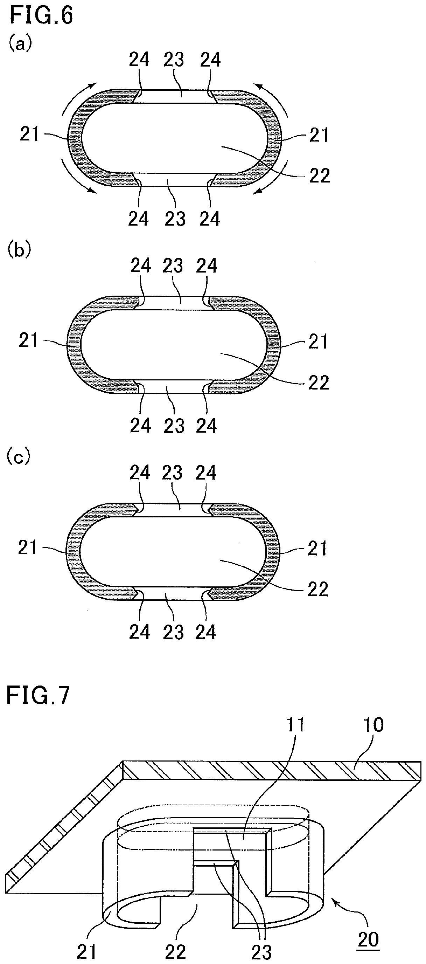

Fig. 6(a), Fig. 6(b), and Fig. 6(c) are each a bottom view of a nozzle constituting another example of the bushing according to the first embodiment of the present disclosure.

In Fig. 6(a), the end surfaces of the nozzle wall 21 are inclined surfaces 24 with which the thickness of the nozzle wall 21 decreases toward the cutouts 23, i.e., in the directions indicated by the arrows. Similarly, in Fig. 6(b) and Fig. 6(c), the end surfaces of the nozzle wall 21 are the inclined surfaces 24 with which the thickness of the nozzle wall 21 decreases toward the cutouts 23.

When the end surfaces of each nozzle wall are inclined surfaces, the inclined surfaces may extend entirely or partly in the height direction of the nozzle. The inclined surfaces may each be any of a flat surface, a curved surface, or a polygonal surface, and is preferably a flat surface for easy processing.

### (Second embodiment)

In the bushing according to the second embodiment of the present disclosure, the nozzle walls are each provided with a pair of cutouts in distal end portions, and the height of each of the cutouts is more than 80% and less than 100% of the distance from the base plate to the distal end of the nozzle wall.

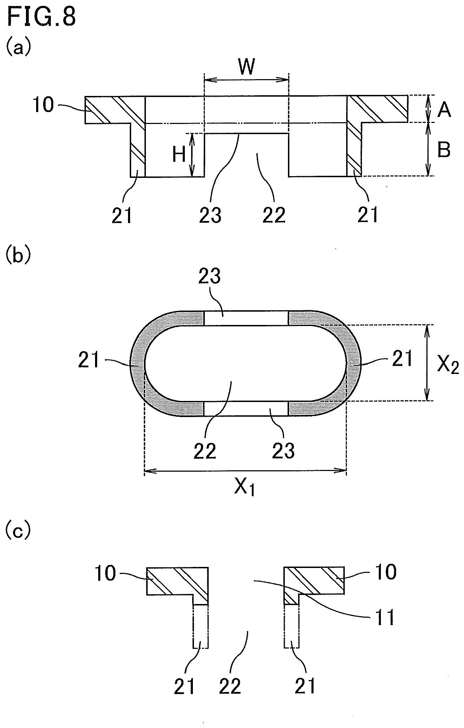

Fig. 7 is a perspective view schematically showing main parts of an example of a bushing according to the second embodiment of the present disclosure. Fig. 8(a) is a cross-sectional view of the bushing shown in Fig. 7 in the lengthwise direction. Fig. 8(b) is a bottom view of a nozzle constituting the bushing shown in Fig. 7. Fig. 8(c) is a cross-sectional view of the bushing shown in Fig. 7 in the short length direction.

As shown in Fig. 7, Fig. 8(a), Fig. 8(b), and Fig. 8(c), the base plate 10 is provided with the base orifices 11 having a horizontally flat cross section, and each of the nozzles 20 is provided with the nozzle wall 21 projecting from the base plate along the outline of the corresponding base orifice 11, and the nozzle orifice 22 that penetrates the nozzle 20 from the base orifice 11 to the distal end of the nozzle wall 21 while keeping the shape of the base orifice 11.

The nozzle wall 21 is provided with a pair of cutouts 23 in distal end portions. The cutouts 23 oppose each other with the longitudinal center axis of the nozzle orifice 22 in between. The cutouts 23 each preferably have a rectangular shape in order to facilitate the processing in nozzle production.

In the bushing according to the second embodiment of the present disclosure, the width of each of the cutouts (the distance indicated by W in Fig. 8(a)) is 10% or more and 95% or less, preferably 15% or more and 95% or less, more preferably 20% or more and 90% or less, still more preferably 25% or more and 90% or less, of the length of the longitudinal center axis of the nozzle orifice (the distance indicated by X₁ in Fig. 8(b)). The width of the cutout may be 80% or less of the length of the longitudinal center axis of the nozzle orifice.

In the bushing according to the second embodiment of the present disclosure, the height of each of the cutouts (the distance indicated by H in Fig. 8(a)) may be more than 80% and less than 100%, preferably more than 90% and less than 100%, more preferably more than 95% and less than 100%, still more preferably more than 98% and less than 100%, of the distance from the base plate to the distal end of the nozzle wall (the distance indicated by B in Fig. 8(a)).

For example, the second embodiment of the present disclosure encompasses a structure in which the heights of the left and right nozzle walls 21 in Fig. 8(a) are different and a structure in which the nozzle walls 21 in Fig. 8(a) project in a direction oblique to the base plate 10, as long as the height of each of the above-defined cutouts is more than 80% and less than 100% of the distance from the base plate 10 to the distal end of the nozzle wall 21.

In the bushing according to the second embodiment of the present disclosure, the entire periphery of each nozzle orifice is surrounded by the corresponding nozzle wall on the base plate. This reduces or prevents staining due to spreading of the glass melts on the base plate. Also, this structure in which the entire periphery of each nozzle orifice is surrounded by the corresponding nozzle wall on the base plate is preferred in terms of easy processing of the nozzles to form the inclined surface described below.

In the bushing according to the second embodiment of the present disclosure, end surfaces of each nozzle wall may each have an inclined surface with which the thickness of the nozzle wall decreases toward the cutouts as viewed from the bottom surface of the nozzle. In this case, an inclined surface is preferably provided such that the thickness of the nozzle wall decreases from the base orifice toward the nozzle orifice.

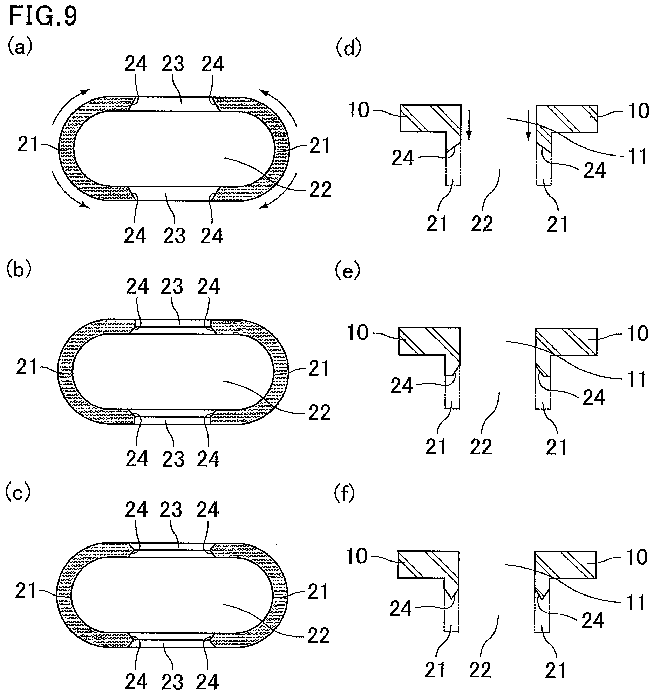

Fig. 9(a), Fig. 9(b), and Fig. 9(c) are each a bottom view of a nozzle constituting another example of the bushing according to the second embodiment of the present disclosure.

In Fig. 9(a), the end surfaces of the nozzle wall 21 are inclined surfaces 24 with which the thickness of the nozzle wall 21 decreases toward the cutouts 23, i.e., in the directions indicated by the arrows. Similarly, in Fig. 9(b) and Fig. 9(c), the end surfaces of the nozzle wall 21 are the inclined surfaces 24 with which the thickness of the nozzle wall 21 decreases toward the cutouts 23.

Fig. 9(d), Fig. 9(e), and Fig. 9(f) are cross-sectional views of the bushings including the nozzles shown in Fig. 9(a), Fig. 9(b), and Fig. 9(c), respectively, in the short length direction.

In Fig. 9(d), the inclined surfaces 24 are provided with which the thickness of the nozzle wall 21 decreases from the base orifice 11 toward the nozzle orifice 22, i.e., in the directions indicated by the arrows. Similarly, in Fig. 9(e) and Fig. 9(f), the inclined surfaces 24 are provided with which the thickness of the nozzle wall 21 decreases from the base orifice 11 toward the nozzle orifice 22.

When the end surfaces of each nozzle wall are inclined surfaces, the inclined surfaces may extend entirely or partly in the height direction of the nozzle. The inclined surfaces may each be any of a flat surface, a curved surface, or a polygonal surface, and is preferably a flat surface for easy processing.

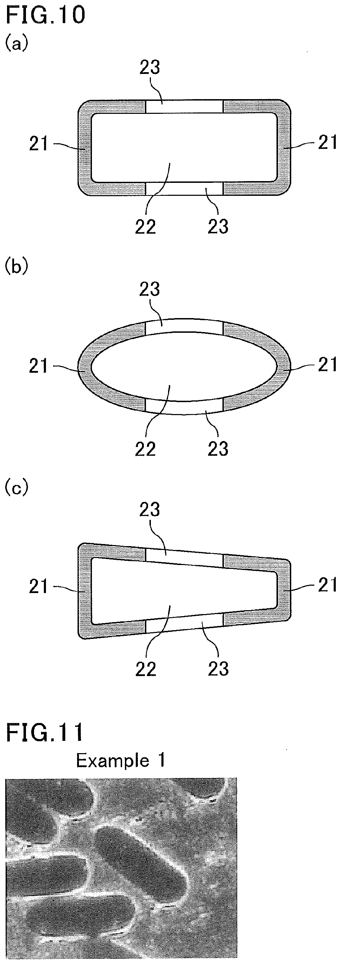

Fig. 10(a), Fig. 10(b), and Fig. 10(c) are each a bottom view of another example of the nozzle constituting the bushing of the present disclosure.

Fig. 10(a) shows a nozzle orifice 22 having a rectangular shape. Fig. 10(b) shows a nozzle orifice 22 having an oval shape. Fig. 10(c) shows a nozzle orifice 22 having a trapezoidal shape. In Fig. 10(a) and Fig. 10(c), each side may be rounded or pointed. Modified examples of the nozzle orifice in Fig. 10(c) include those having a gourd shape, a dumbbell shape, or a triangular shape.

In the bushing of the present disclosure, the base orifices and the nozzle orifices preferably have an oblong or rectangular cross-sectional shape, particularly preferably an oblong cross-sectional shape, in terms of easy nozzle production and easy production of glass fibers each being symmetrical about the longitudinal center axis.

In the bushing of the present disclosure, the ratio (the distance from the base plate to the distal end of the nozzle wall (the distance indicated by B in Fig. 5(a) and Fig. 8(a)))/(the thickness of base plate (the distance indicated by A in Fig. 5(a) and Fig. 8(a))) is preferably 0.2 or more and 4 or less, more preferably 0.2 or more and 3 or less, still more preferably 0.2 or more and 1 or less.

In the bushing of the present disclosure, the thickness of the base plate is, for example, 0.5 mm or more and 2 mm or less, preferably 0.8 mm or more and 1.8 mm or less.

In the bushing of the present disclosure, the thickness of each nozzle wall is, for example, 0.05 mm or more and 5 mm or less, preferably 0.1 mm or more and 3 mm or less.

In the bushing of the present disclosure, the distance from the base plate to the distal end of the nozzle wall is determined by taking into account the amount of the glass melts to be drawn from the nozzles, and is, for example, 0.1 mm or more and 7 mm or less, preferably 0.2 mm or more and 5 mm or less. The capacity of a nozzle is calculated using the cross-sectional area of the nozzle orifice and the distance from the base plate to the distal end of the nozzle wall, and is, for example, 0.3 mm³ or more and 140 mm³ or less, preferably 0.5 mm³ or more and 80 mm³ or less.

In the bushing of the present disclosure, the ratio (the length of the longitudinal center axis of the nozzle orifice (the distance indicated by X₁ in Fig. 5(b) and Fig. 8(b)))/(the length of the longest portion of the nozzle orifice in the short length direction (the distance indicated by X₂ in Fig. 5(b) and Fig. 8(b))) is typically preferably 2 or more, specifically preferably 2 or more and 12 or less, more preferably 3 or more and 12 or less, particularly preferably 3 or more and 10 or less. The ratio may be 8 or less or 6 or less.

When the nozzle orifices have an oblong cross-sectional shape, the length of the longitudinal center axis of the nozzle orifice is the length of the longer axis, and the length of the longest portion of the nozzle orifice in the short length direction is the length of the shorter axis.

In the bushing of the present disclosure, the length of the longitudinal center axis of a nozzle orifice and the length of the longest portion of the nozzle orifice in the short length direction are selected depending on the desired fiber diameter of the glass fibers. The length of the longitudinal center axis of the nozzle orifice is, for example, 2 mm or more and 10 mm or less, preferably 2 mm or more and 8 mm or less. The length of the longest portion of the nozzle orifice in the short length direction is, for example, 0.3 mm or more and 2 mm or less, preferably 0.5 mm or more and 2 mm or less. When the nozzle orifice has an oblong cross-sectional shape, the length of the longer axis is, for example, 2 mm or more and 10 mm or less, preferably 2 mm or more and 8 mm or less. The length of the shorter axis is, for example, 0.3 mm or more and 2 mm or less, preferably 0.5 mm or more and 2 mm or less.

In the bushing of the present disclosure, the cross-sectional area of the base orifices and the cross-sectional area of the ends of the nozzle orifices are preferably the same. In particular, the cross-sectional shape of the base orifices and the cross-sectional shape of the nozzle orifices are preferably the same.

In the bushing of the present disclosure, the length of the longitudinal center axis of a base orifice and the length of the longest portion of the base orifice in the short length direction are selected depending on the desired fiber diameter of the glass fibers. The length of the longitudinal center axis of the base orifice is, for example, 2 mm or more and 10 mm or less, preferably 2 mm or more and 8 mm or less. The length of the longest portion of the base orifice in the short length direction is, for example, 0.3 mm or more and 2 mm or less, preferably 0.5 mm or more and 2 mm or less. When the base orifice has an oblong cross-sectional shape, the length of the longer axis is, for example, 2 mm or more and 10 mm or less, preferably 2 mm or more and 8 mm or less. The length of the shorter axis is, for example, 0.3 mm or more and 2 mm or less, preferably 0.5 mm or more and 2 mm or less.

In the bushing of the present disclosure, the total area of the cutouts in terms of portions defined by the inner surface of the nozzle wall is preferably 1% or more and 80% or less, more preferably 3% or more and 80% or less, still more preferably 5% or more and 75% or less, even more preferably 10% or more and 70% or less, of the total area of the inner surface of the nozzle wall including the total area of the cutouts.

In the bushing of the present disclosure, the cutouts preferably oppose each other with the center of the longitudinal center axis of the nozzle orifice in between, and more preferably, the cutouts each have a rectangular shape.

In the bushing of the present disclosure, the base plate is preferably made of platinum or a platinum alloy. Examples of the platinum alloy include alloys of platinum as a base with a noble metal such as rhodium, gold, palladium, or silver and strengthened metals in which fine particles such as zirconia fine particles are dispersed in any of the noble metals and alloys. In consideration of the strength of the base plate, a platinum-rhodium alloy containing 5 to 30 wt% of rhodium in platinum and a strengthened platinum-rhodium alloy containing zirconia fine particles dispersed in a platinum-rhodium alloy are preferred.

In the bushing of the present disclosure, the nozzle walls are preferably made of platinum or a platinum alloy as with the base plate. In consideration of the strength of the nozzle walls, a platinum-rhodium alloy containing 5 to 30 wt% of rhodium in platinum and a strengthened platinum-rhodium alloy containing zirconia fine particles dispersed in a platinum-rhodium alloy are preferred. The material of the nozzle walls may be the same as or different from the material of the base plate.

In the bushing of the present disclosure, nozzles produced by a process such as cutting, casting, pipe squeezing, or extension may be inserted into a drilled base plate, and then welded. Alternatively, nozzles integrated with a base plate may be produced by directly cutting the base plate.

### [Method of producing glass fibers and method of producing glass fiber strand]

The method of producing glass fibers of the present disclosure is a method of producing glass fibers each having a flat cross section symmetrical about the longitudinal center axis, the method including drawing glass melts from each of the nozzles of the bushing of the present disclosure, and quenching the glass melts for fiber formation.

The method of producing a glass fiber strand of the present disclosure includes obtaining glass fibers by the production method of the present disclosure, and bundling the glass fibers.

Hereinafter, a method of producing glass fibers GF and a glass fiber strand GS using the device 100 for producing glass fibers shown in Fig. 1(a) and Fig. 1(b) are described as an embodiment of the method of producing glass fibers of the present disclosure and the method of producing a glass fiber strand of the present disclosure.

The glass melts GM held in the reservoir are drawn from the nozzles 20 through the base orifices 11 of the base plate 10 and the nozzle orifices 22 of the nozzles 20.

The glass melts GM drawn from the nozzles 20 are formed into glass fibers through cooling, so that glass fibers GF are produced. Formation of fibers of the drawn glass melts GM is promoted by pulling the glass melts GM by the winder 50 or the like.

The glass constituting the glass fibers GF can be glass having a known glass composition. Examples of the known glass composition include E glass, C glass, S glass, D glass, ECR glass, A glass, and AR glass. Preferred among these is E glass because E glass has less alkali components in the glass and is highly water resistant, which reduces the risks of alkali dissolution, reducing the influence on the resin material when the glass is combined with a resin. The temperature of the glass melts GM varies depending on the glass composition. In the case of E glass, the temperature of the glass melts GM flowing through the nozzles is preferably adjusted to 1100°C or higher and 1350°C or lower.

The glass melts GM drawn from the nozzles 20 are preferably pulled at a high speed by a device such as the winder 50 including a collet. The drawing speed can be controlled as appropriate and is preferably 100 m/min or more and 5000 m/min or less. A higher drawing speed produces thinner glass fibers GF, while a lower drawing speed produces thicker glass fibers GF. Thus, the drawing speed is determined in consideration of the shape design of the glass fibers GF. The glass fibers GF can be pulled by any of various methods as well as pulling by the winder 50 including a collet. For example, a direct chopper that cuts the glass fibers GF while pulling the glass fibers GF enables appropriate production of chopped strands.

The fibers of the glass melts GM drawn from the nozzles 20 are bundled by the gathering shoe 52 positioned between the bushing 1 and the winder 50, whereby a glass fiber strand GS is produced. The glass fiber strand GS is wound onto the collet of the winder 50. Thus, the glass melts GM drawn from a nozzle 20 other than a nozzle 20 at the center of the base plate 10 are at an angle. This angle is greater for a nozzle 20 closer to the end of the base plate 10.

Before the glass fibers GF are wound by a device such as the winder 50, a sizing agent may be applied to the glass fibers GF as appropriate with a device such as the applicator 51. Examples of the sizing agent include known sizing agents formed from a surfactant, a silane coupling agent, a pH adjustor, a resin, and the like. In the case of processing such as grinding, no sizing agent may be used. Whether or not a sizing agent is used is determined as appropriate according to the intended use of the glass fibers.

In the method of producing glass fibers of the present disclosure, the angle of the glass melts drawn from the nozzles (glass fiber pulling angle) is not limited. However, too large a variation in glass fiber pulling angles among the nozzles may lead to a large variation in cross-sectional shapes of the glass fibers even when the bushing of the present disclosure is used. Thus, the glass fiber pulling angle is preferably 0° or more and 10° or less, more preferably 0° or more and 7° or less.

The glass fiber pulling angle includes the pulling angle of a glass fiber in the lengthwise direction of the nozzle and the pulling angle of a glass fiber in the short length direction of the nozzle, with the position directly below the nozzle orifice as a reference. Herein, the glass fiber pulling angle means the pulling angle of a glass fiber in the lengthwise direction of the nozzle unless otherwise specified.

With the position directly below the nozzle orifice as a reference, the pulling angle of a glass fiber in the short length direction of the nozzle has a smaller influence on the variation in the cross-sectional shapes of the glass fibers than the pulling angle of a glass fiber in the lengthwise direction of the nozzle. However, too large a pulling angle of a glass fiber in the short length direction of the nozzle may unfortunately increase the variation in the cross-sectional shapes. Thus, the pulling angle of a glass fiber in the short length direction of the nozzle is preferably 0° or more and 45° or less, more preferably 0° or more and 30° or less.

As described above, glass fibers each having a flat cross section symmetrical about the longitudinal center axis can be produced. The cross-sectional size of the glass fibers is designed as appropriate depending on conditions such as the sizes of the base orifices and the nozzle orifices, the temperature of the glass melts and nozzles, and the drawing speed of the winder. The length of the longitudinal center axis of a glass fiber is, for example, 4 to 80 µm, preferably 10 to 60 µm. The length of the widthwise central axis of a glass fiber is, for example, 1 to 20 µm, preferably 2.5 to 15 µm. The flatness ratio of the glass fibers is, for example, 2 to 10.

In a glass fiber strand in which the obtained glass fibers are bundled, the average flatness ratio of the cross-sectional shapes of the glass fibers is preferably 2 or more. Meanwhile, the average flatness ratio of the cross-sectional shapes of the glass fibers is preferably 8 or less, more preferably 6.5 or less.

In a glass fiber strand in which the obtained glass fibers are bundled, the standard deviation of the flatness ratio of the cross-sectional shapes of the glass fibers is preferably 0% or more and 14% or less, more preferably 0% or more and 12% or less, still more preferably 0% or more and 10% or less.

Herein, the standard deviation of the flatness ratio is the ratio of the standard deviation of the flatness ratio to the average flatness ratio represented in the form of a percentage.

In a glass fiber strand in which the obtained glass fibers are bundled, the standard deviation of cross-sectional areas of glass fibers is preferably 0% or more and 14% or less, more preferably 0% or more and 12% or less, still more preferably 0% or more and 10% or less.

Herein, the standard deviation of cross-sectional areas of glass fibers is the ratio of the standard deviation of cross-sectional areas of glass fibers to the average cross-sectional area of glass fibers represented in the form of a percentage.

The flatness ratio and cross-sectional area of glass fibers can be determined by cutting a fiber or strand at a certain cross section and observing the cross section. The flatness ratio refers to a value resulting from dividing the longer axis of the cross section of a fiber by the shorter axis thereof. The cross-sectional area of a glass fiber refers to the area of the cross section of the fiber. In the case of cutting a fiber or strand at a certain cross section and observing the cross section, the fiber or strand may be embedded in a resin or the like (embedding), cut, polished, and then observed, or the fiber or strand may be directly cut and observed.

The obtained glass fiber or glass fiber strand can be subjected to processing such as cutting, grinding, heating, textile making, paper making, or twisting as appropriate. Through such processing, the glass fibers and the glass strand can be formed into a shape such as a chopped strand, chopped strand mat, milled fiber, surface mat, glass paper, glass fiber textile, or roving cloth. Gathering (uniting) glass fiber strands can also produce a glass fiber strand with more glass fibers.

Glass fibers produced using the bushing of the present disclosure, glass fibers produced by the method of producing glass fibers of the present disclosure, and a glass fiber strand produced by the method of producing a glass fiber strand of the present disclosure can be formed into a fiber-reinforced resin product when combined with a resin. The resin to be combined with the glass fiber can be a known resin. Examples thereof include thermoplastic resins such as low density polyethylene, high density polyethylene, polypropylene, polyvinyl chloride, polystyrene, methacrylic resin, ABS resin, metallocene resin, polyamide, polyacetal, polycarbonate, polyphenylene ether, polyethylene terephthalate, polybutylene terephthalate, liquid crystal polymers, polyphenylene sulfide, polyimide, polyether sulfone, polyether ether ketone, and fluororesin; thermosetting resins such as epoxy resin, silicone resin, phenolic resin, unsaturated polyester resin, and polyurethane; rubbers, and elastomers. The fiber-reinforced resin may contain 0.01 to 80 wt% of glass fibers. Since glass fibers having a flat cross section easily stack each other, increasing the amount of glass fibers in the fiber-reinforced resin contributes to an increase in strength, and enables prevention of warpage that tends to occur during molding such as injection molding.

Glass fibers and a resin can be combined by a known method and device for kneading that are suited for the characteristics of the resin to be combined. A heat-melting kneader is preferred for thermoplastic resins. Examples of the kneader include single-screw kneaders, twin-screw kneaders, single-screw extruders, twin-screw extruders, and kneaders and mixers each with a heater.

For a fiber-reinforced resin product obtained by kneading glass fibers and a resin, a known molding method can be used which suits the characteristics and shape of the composite. A method suitable for a thermoplastic resin may be, for example, injection molding or blow molding. A method suitable for a thermosetting resin may be, for example, hand lay-up method, spray-up method, drawing molding method, SMC method, BMC method, or transfer molding method. Glass fibers having a flat cross section are preferred since they easily stack each other and therefore can prevent warpage of the resulting product even when injection molding is employed. A molded composite (fiber-reinforced resin product containing glass fibers) can be used as a component or housing in machines requiring strength, heat resistance, and chemical resistance, such as automobiles and electronic devices.

### EXAMPLES

The present disclosure is further described below with reference to examples and comparative examples. The examples are not intended to limit the scope of the present disclosure. Glass fibers obtained in the examples and comparative examples were evaluated by the method described below.

### [Glass fiber evaluation method]

The produced glass fibers were hardened with a cold mounting resin (Marumoto Struers K.K., EpoFix) and a cut surface thereof was polished. The polished surface was observed with a field emission scanning electron microscope (S-4500, Hitachi, Ltd.), and whether the cross section of each fiber was symmetrical about the longitudinal center axis (longer axis) and about the widthwise central axis (shorter axis) was determined. Also, in Examples 1 to 18 and comparative examples, the longer axis and the shorter axis were measured on ten cross sections of a fiber, and the average of the longer axes, the average of the shorter axes, and flatness ratio, which is the average of values obtained by dividing the longer axis by the shorter axis, were calculated. As for the flatness ratio, the percentage of the standard deviation of the average was calculated, which was taken as the standard deviation (%) of the flatness ratio. In Example 19, fiber strands each consisting of 36 glass fibers were cut, and the cross sections thereof were observed. From the obtained photographs, 50 glass fibers were selected, and the longer axis and the shorter axis of each fiber were measured. Then, the average of the longer axes, the average of the shorter axes, the average of the cross-sectional areas, and the flatness ratio, which is the average of values obtained by dividing the longer axis by the shorter axis, were calculated. As for the flatness ratio, the percentage of the standard deviation of the average was calculated, which was taken as the standard deviation (%) of the flatness ratio. As for the cross-sectional area, the percentage of the standard deviation of the average was calculated, which was taken as the standard deviation (%) of the cross-sectional area. In Examples 20 and 21, fiber strands each consisting of 192 glass fibers were cut, and the cross sections thereof were observed. From the obtained photographs, 256 glass fibers were selected in Example 20 and 20 glass fibers were selected in Example 21, which were then subjected to the measurement for the same evaluations as above.

### Example 1

A nozzle tip was installed on the bottom surface (base plate: thickness 1.0 mm) of a reservoir for glass. glass melts having an E glass composition melted in the reservoir for glass were drawn at 1200°C from the nozzle orifice. The drawn glass was wound at 958 m/min, so that glass fibers were obtained.

The nozzle tip used had a structure in which the thickness of the nozzle wall was 0.5 mm, the longer axis of the nozzle orifice in a horizontal cross section was 4.8 mm, the shorter axis thereof was 1.2 mm, the distance from the base plate to the distal end of the nozzle wall was 0.6 mm, the width of each cutout was 2.4 mm (50% of the longer axis of the nozzle orifice), the height of each cutout was 0.6 mm, and the shape of each cutout was rectangular. The total area of the cutouts was 2.9 mm², which was 44% of the total area of the inner surface of the nozzle wall including the area of the cutouts.

Fig. 11 is a field emission scanning electron microscope photograph of cross sections of glass fibers in Example 1.

Evaluation of the obtained fibers by the glass fiber evaluation method confirmed that the obtained fibers were glass fibers each having an oblong cross section symmetrical about the longitudinal center axis (longer axis) and the widthwise central axis (shorter axis) even though the nozzle used had a very short distance from the base plate to the distal end of the nozzle wall. The obtained fibers each had a longer axis length of 30.0 µm, a shorter axis length of 9.4 µm, and a flatness ratio of 3.2. The standard deviation of the flatness ratio was 2.9%, meaning that the variation in flatness ratio was small.

### Example 2

Glass fibers were drawn under the same conditions as in Example 1 except that the drawing temperature was 1180°C.

Evaluation of the obtained fibers by the glass fiber evaluation method confirmed that the obtained fibers were glass fibers each having an oblong cross section symmetrical about the longer axis and the shorter axis. The obtained fibers each had a longer axis length of 25.6 µm, a shorter axis length of 7.4 µm, and a flatness ratio of 3.5. The standard deviation of the flatness ratio was 6.4%, meaning that the variation in flatness ratio was small.

### Example 3

Glass fibers were drawn under the same conditions as in Example 1 except that the width of each cutout in the nozzle tip was 2.0 mm (42% of the longer axis length of the nozzle orifice). The total area of the cutouts was 2.4 mm², which was 36% of the total inner surface area of the nozzle wall including the area of the cutouts.

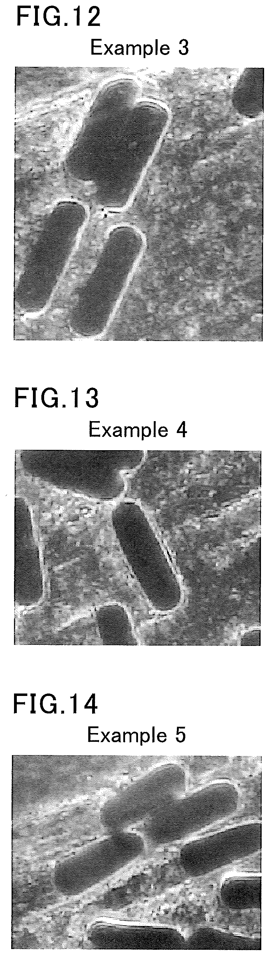

Fig. 12 is a field emission scanning electron microscope photograph of cross sections of glass fibers in Example 3.

Evaluation of the obtained fibers by the glass fiber evaluation method confirmed that the obtained fibers were glass fibers each having an oblong cross section symmetrical about the longer axis and the shorter axis. The obtained fibers each had a longer axis length of 28.2 µm, a shorter axis length of 7.7 µm, and a flatness ratio of 3.7. The standard deviation of the flatness ratio was 3.8%, meaning that the variation in flatness ratio was small.

### Example 4

Glass fibers were drawn at a pulling angle of 2.5° in the lengthwise direction of the nozzle with the position directly below the nozzle orifice as a reference. The other conditions were the same as in Example 1.

Fig. 13 is a field emission scanning electron microscope photograph of cross sections of glass fibers in Example 4.

Evaluation of the obtained fibers by the glass fiber evaluation method confirmed that the obtained fibers were glass fibers each having an oblong cross section symmetrical about the longer axis and the shorter axis even though the glass fibers were each pulled at an angle in the lengthwise direction of the nozzle. The obtained fibers each had a longer axis length of 27.7 µm, a shorter axis length of 8.1 µm, and a flatness ratio of 3.4. The standard deviation of the flatness ratio was 5.5%, meaning that the variation in flatness ratio was small.

### Example 5

Glass fibers were drawn under the same conditions as in Example 4 except that the glass fiber pulling angle was 5° in the lengthwise direction of the nozzle with the position directly below the nozzle orifice as a reference.

Fig. 14 is a field emission scanning electron microscope photograph of cross sections of glass fibers in Example 5.

Evaluation of the obtained fibers by the glass fiber evaluation method confirmed that the obtained fibers were glass fibers each having an oblong cross section symmetrical about the longer axis and the shorter axis even though the pulling angle was made greater than that in Example 4. The obtained fibers each had a longer axis length of 24.3 µm, a shorter axis length of 8.1 µm, and a flatness ratio of 3.0. The standard deviation of the flatness ratio was 7.5%, meaning that the variation in flatness ratio was small.

The glass fibers in Examples 1, 4, and 5 were drawn by the methods different only in the glass fiber pulling angle. When the glass fiber pulling angle was increased, i.e., when the angles were 0°, 2.5°, and 5°, the flatness ratio of the glass fibers were 3.2, 3.4, and 3.0, respectively, showing no significant difference due to the glass fiber pulling angle. This confirmed that the nozzle shape in Example 1 suits the purpose of producing fiber strands having a uniform cross-sectional shape using the bushing.

### Example 6

Glass fibers were drawn under the same conditions as in Example 1 except that the drawing temperature was 1210°C.

Evaluation of the obtained fibers by the glass fiber evaluation method confirmed that the obtained fibers were glass fibers each having an oblong cross section symmetrical about the longer axis and the shorter axis. The obtained fibers each had a longer axis length of 28.8 µm, a shorter axis length of 9.4 µm, and a flatness ratio of 3.1. The standard deviation of the flatness ratio was 5.4%, meaning that the variation in flatness ratio was small.

### Example 7

Glass fibers were drawn under the same conditions as in Example 3 except that the drawing temperature was 1210°C.

Evaluation of the obtained fibers by the glass fiber evaluation method confirmed that the obtained fibers were glass fibers each having an oblong cross section symmetrical about the longer axis and the shorter axis. The obtained fibers each had a longer axis length of 26.9 µm, a shorter axis length of 8.8 µm, and a flatness ratio of 3.1. The standard deviation of the flatness ratio was 3.2%, meaning that the variation in flatness ratio was small.

### Example 8

Glass fibers were drawn under the same conditions as in Example 3 except that the drawing temperature was 1180°C.

Evaluation of the obtained fibers by the glass fiber evaluation method confirmed that the obtained fibers were glass fibers each having an oblong cross section symmetrical about the longer axis and the shorter axis. The obtained fibers each had a longer axis length of 24.2 µm, a shorter axis length of 7.6 µm, and a flatness ratio of 3.2. The standard deviation of the flatness ratio was 5.7%, meaning that the variation in flatness ratio was small.

The glass fibers in Examples 2 and 6 were drawn by the methods different only in the drawing temperature for the glass fibers. When the drawing temperature for the glass fibers was increased, i.e., when the temperatures were 1180°C, 1200°C, and 1210°C, the flatness ratio of the glass fibers were 3.5, 3.2, and 3.1, respectively, showing no significant difference due to the drawing temperature for the glass fibers. This confirmed that the nozzle shape in Example 1 suits the purpose of producing fiber strands having a uniform cross-sectional shape using the bushing.

The glass fibers in Examples 3, 7, and 8 were drawn by the methods different only in the drawing temperature for the glass fibers. When the drawing temperature for the glass fibers was increased, i.e., when the temperatures were 1180°C, 1200°C, and 1210°C, the flatness ratio of the glass fibers were 3.2, 3.7, and 3.1, respectively, showing no significant difference due to the drawing temperature for the glass fibers. This confirmed that the nozzle shape in Example 3 suits the purpose of producing fiber strands having a uniform cross-sectional shape using the bushing.

### Example 9

Glass fibers were drawn under the same conditions as in Example 3 except that the distance from the base plate to the distal end of the nozzle wall on the nozzle tip was 0.9 mm and the height of each cutout was 0.9 mm. The total area of the cutouts was 3.6 mm², which was 36% of the total area of the inner surface of the nozzle wall including the area of the cutouts.

Evaluation of the obtained fibers by the glass fiber evaluation method confirmed that the obtained fibers were glass fibers each having an oblong cross section symmetrical about the longer axis and the shorter axis. The obtained fibers each had a longer axis length of 25.4 µm, a shorter axis length of 8.8 µm, and a flatness ratio of 2.9. The standard deviation of the flatness ratio was 5.9%, meaning that the variation in flatness ratio was small.

### Example 10

Drawing was performed using a nozzle having a structure in which the longer axis of the nozzle orifice in a horizontal cross section was 6.0 mm, the shorter axis thereof was 1.2 mm, the distance from the base plate to the distal end of the nozzle wall was 0.6 mm, the width of each cutout was 3.6 mm (60% of the longer axis of the nozzle orifice), and the height of each cutout was 0.6 mm. The total area of the cutouts was 4.3 mm², which was 54% of the total area of the inner surface of the nozzle wall including the area of the cutouts. The drawing temperature was 1200°C, and the other conditions were the same as in Example 1.

Glass fibers were obtained under the above conditions with different glass fiber pulling angles of 0°, 2.5°, and 5°. Evaluation of the obtained fibers by the glass fiber evaluation method confirmed that the obtained fibers were glass fibers each having an oblong cross section symmetrical about the longer axis and the shorter axis at all the pulling angles. When the pulling angle was increased, i.e., when the angles were 0°, 2.5°, and 5°, the flatness ratio of the glass fibers were 4.1 (longer axis length/shorter axis length = 39.4 pm/9.6 µm), 4.3 (the same ratio = 44.0 µm/10.2 µm), and 4.3 (the same ratio = 44.5 µm/10.3 µm), respectively, showing no significant difference due to the glass fiber pulling angle. This confirmed that the nozzle shape in Example 10 suits the purpose of producing fiber strands having a uniform cross-sectional shape using the bushing.

### Example 11

Glass fibers were obtained under the same conditions as in Example 10 except that the width of each cutout in the nozzle tip was 3.2 mm (53% of the longer axis of the nozzle orifice), the drawing temperature was 1160°C, and the glass fiber pulling angles were 0°, 2.5°, and 5°. The total area of the cutouts was 3.8 mm², which was 48% of the total area of the inner surface of the nozzle wall including the area of the cutouts.

Evaluation of the obtained fibers by the glass fiber evaluation method confirmed that the obtained fibers were glass fibers each having an oblong cross section symmetrical about the longer axis and the shorter axis at all the pulling angles. When the pulling angle was increased, i.e., when the angles were 0°, 2.5°, and 5°, the flatness ratio of the glass fibers were 4.4 (longer axis length/shorter axis length = 39.0 µm/8.9 µm), 4.4 (the same ratio = 40.0 µm/9.0 µm), and 4.2 (the same ratio = 36.6 µm/8.8 µm), respectively, showing no significant difference due to the glass fiber pulling angle. This confirmed that the nozzle shape in Example 11 suits the purpose of producing fiber strands having a uniform cross-sectional shape using the bushing.

### Example 12

Glass fibers were obtained using the nozzle tip described in Example 10 at drawing temperatures of 1160°C, 1180°C, and 1200°C. The other conditions were the same as in Example 10. Evaluation of the obtained fibers by the glass fiber evaluation method confirmed that the obtained fibers were glass fibers each having an oblong cross section symmetrical about the longer axis and the shorter axis at all the above temperatures. When the drawing temperature was increased, i.e., when the temperatures were 1160°C, 1180°C, and 1200°C, the flatness ratio of the glass fibers were 4.1 (longer axis length/shorter axis length = 35.1 µm/8.7 µm), 4.4 (the same ratio =40.6 µm/9.2 µm), and 4.1 (the same ratio = 39.4 pm/9.6 µm), respectively. The flatness ratio was maintained high even when the drawing temperature increased. This suggests that the nozzle shape in Example 10 enables production of fiber strands having a uniform flatness ratio using the bushing even when the temperature is uneven in the base plate.

### Example 13

Glass fibers were obtained using the nozzle tip described in Example 11 at drawing temperatures of 1140°C, 1160°C, 1180°C, and 1200°C. The other conditions were the same as in Example 11. Evaluation of the obtained fibers by the glass fiber evaluation method confirmed that the obtained fibers were glass fibers each having an oblong cross section symmetrical about the longer axis and the shorter axis at all the above temperatures. When the drawing temperature was increased, i.e., when the temperatures were 1140°C, 1160°C, 1180°C, and 1200°C, the flatness ratio of the glass fibers were 3.9 (longer axis length/shorter axis length = 35.3 µm/9.1 µm), 4.4 (the same ratio = 39.0 µm/8.9 µm), 4.0 (the same ratio = 40.7 µm/10.1 µm), and 3.6 (the same ratio = 42.0 µm/11.7 µm), respectively. The flatness ratio was maintained high even when the drawing temperature increased. This suggests that the nozzle shape in Example 11 enables production of fiber strands having a uniform flatness ratio using the bushing even when the temperature is uneven in the base plate.

### Example 14

Glass fibers were obtained under the same conditions as in Example 10 except that the width of each cutout in the nozzle tip was 2.8 mm (47% of the longer axis of the nozzle orifice), the drawing temperature was 1180°C, and the glass fiber pulling angles were 0°, 2.5°, and 5°. The total area of the cutouts was 3.4 mm², which was 42% of the total area of the inner surface of the nozzle wall including the area of the cutouts.

Evaluation of the obtained fibers by the glass fiber evaluation method confirmed that the obtained fibers were glass fibers each having an oblong cross section symmetrical about the longer axis and the shorter axis at all the pulling angles. When the pulling angle was increased, i.e., when the angles were 0°, 2.5°, and 5°, the flatness ratio of the glass fibers were 4.0 (longer axis length/shorter axis length = 39.6 µm/10.0 µm), 3.9 (the same ratio = 40.4 µm/10.3 µm), and 3.4 (the same ratio = 35.6 µm/10.5 µm), respectively, showing no significant difference due to the glass fiber pulling angle. This confirmed that the nozzle shape in Example 14 suits the purpose of producing fiber strands having a uniform cross-sectional shape using the bushing.

### Example 15

Glass fibers were obtained under the same conditions as in Example 14 except that the width of each cutout in the nozzle tip was 2.4 mm (40% of the longer axis of the nozzle orifice) and the glass fiber pulling angles were 0°, 2.5°, and 5°. The total area of the cutouts was 2.9 mm², which was 36% of the total area of the inner surface of the nozzle wall including the area of the cutouts.

Evaluation of the obtained fibers by the glass fiber evaluation method confirmed that the obtained fibers were glass fibers each having an oblong cross section symmetrical about the longer axis and the shorter axis at all the pulling angles. When the pulling angle was increased, i.e., when the angles were 0°, 2.5°, and 5°, the flatness ratio of the glass fibers were 3.8 (longer axis length/shorter axis length = 40.6 µm/10.7 µm), 3.7 (the same ratio = 41.6 µm/11.3 µm), and 3.8 (the same ratio = 43.1 µm/11.4 µm), respectively, showing no significant difference due to the glass fiber pulling angle. This confirmed that the nozzle shape in Example 15 suits the purpose of producing fiber strands having a uniform cross-sectional shape using the bushing.

### Example 16

Glass fibers were obtained using the nozzle tip described in Example 14 at drawing temperatures of 1160°C, 1180°C, and 1200°C. The other conditions were the same as in Example 14. Evaluation of the obtained fibers by the glass fiber evaluation method confirmed that the obtained fibers were glass fibers each having an oblong cross section symmetrical about the longer axis and the shorter axis at all the above temperatures. When the drawing temperature was increased, i.e., when the temperatures were 1160°C, 1180°C, and 1200°C, the flatness ratio of the glass fibers were 4.3 (longer axis length/shorter axis length = 38.7 µm/9.0 µm), 4.0 (the same ratio = 39.6 µm/10.0 µm), and 3.8 (the same ratio = 40.7 µm/10.8 µm), respectively. The flatness ratio was maintained high even when the drawing temperature increased. This suggests that the nozzle shape in Example 14 enables production of fiber strands having a uniform flatness ratio using the bushing even when the temperature is uneven in the base plate.

### Example 17

Glass fibers were drawn under the same conditions as in Example 9 except that the width of each cutout in the nozzle tip was 3.2 mm (67% of the longer axis of the nozzle orifice). The total area of the cutouts was 5.8 mm², which was 58% of the total area of the inner surface of the nozzle wall including the area of the cutouts. Evaluation of the obtained fibers by the glass fiber evaluation method confirmed that the obtained fibers were glass fibers each having an oblong cross section symmetrical about the longer axis and the shorter axis. The obtained fibers each had a longer axis length of 31.2 µm, a shorter axis length of 8.6 µm, and a flatness ratio of 3.7.

### Example 18

Glass fibers were drawn under the same conditions as in Example 1 except that the width of each cutout in the nozzle tip was 2.8 mm (58% of the longer axis of the nozzle orifice). The total area of the cutouts was 3.4 mm², which was 51% of the total area of the inner surface of the nozzle wall including the area of the cutouts. Evaluation of the obtained fibers by the glass fiber evaluation method confirmed that the obtained fibers were glass fibers each having an oblong cross section symmetrical about the longer axis and the shorter axis. The obtained fibers each had a longer axis length of 32.4 µm, a shorter axis length of 9.0 µm, and a flatness ratio of 3.6.

### Example 19

Glass fibers were drawn using a bushing in which 36 (6 rows × 6 columns) nozzle tips described in Example 10 were arranged in a rectangular shape at 10 mm pitches on a 100 × 70 mm base plate, at a drawing temperature of 1190°C and a winding speed of 1629 m/min.

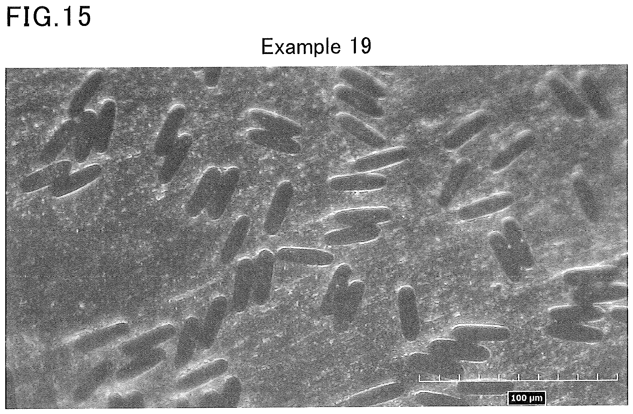

Fig. 15 is a field emission scanning electron microscope photograph of cross sections of glass fibers in Example 19.

Evaluation of the obtained glass fibers by the glass fiber evaluation method confirmed that the obtained fibers were glass fibers each having an oblong cross section symmetrical about the longer axis and the shorter axis. The obtained glass fibers each had a longer axis length of 28.2 µm, a shorter axis length of 7.4 µm, a flatness ratio of 3.8, and a cross-sectional area of 199.5 µm². The standard deviation of the flatness ratio was 9.2% and the standard deviation of the cross-sectional area was 8.7%, meaning that the glass fiber strands had a small variation in cross-sectional shape. Also, measurement at different sites of the obtained glass fiber strand confirmed that sufficient reproducibility was achieved.

### Example 20

Glass fibers were drawn using a bushing in which 192 (6 rows × 32 columns) nozzle tips described in Example 10 were arranged in a rectangular shape at 10 mm intervals on a 426 × 91 mm base plate, at a drawing temperature of 1170°C and a winding speed of 2108 m/min.

Evaluation of the obtained fibers by the glass fiber evaluation method confirmed that the obtained fibers were glass fibers each having an oblong cross section symmetrical about the longer axis and the shorter axis. The obtained glass fibers each had a longer axis length of 26.1 µm, a shorter axis length of 6.6 µm, a flatness ratio of 4.1, and a cross-sectional area of 163.8 µm². The standard deviation of the flatness ratio was 12.7% and the standard deviation of the cross-sectional area was 12.0%, meaning that the glass fiber strands had a small variation in cross-sectional shape.

### Example 21

Glass fibers were drawn under the same conditions as in Example 20 except that the winding speed was 2683 m/min. Evaluation of the obtained glass fibers by the glass fiber evaluation method confirmed that the obtained fibers were glass fibers each having an oblong cross section symmetrical about the longer axis and the shorter axis. The obtained glass fibers each had a longer axis length of 22.3 µm, a shorter axis length of 5.4 µm, a flatness ratio of 4.2, and a cross-sectional area of 133.9 µm². The standard deviation of the flatness ratio was 10.5% and the standard deviation of the cross-sectional area was 13.7%, meaning that the glass fiber strands had a small variation in cross-sectional shape.

The results in Examples 19, 20, and 21 show that the nozzle shape in Example 10 suits the purpose of producing glass fiber strands having a uniform cross-sectional shape using the bushing with many nozzles.

As is clear from the present examples, each of the glass fiber strands obtained in the present disclosure has high uniformity of their glass fibers. With such high uniformity, glass fibers can be easily aligned and gathered into a strand.

### Example 22

Glass fibers were drawn under the same conditions as in Example 10 except that the width of each cutout in the nozzle tip was 4.8 mm (80% of the longer axis of the nozzle orifice) and the drawing temperature was 1190°C. The total area of the cutouts was 5.8 mm², which was 72% of the total area of the inner surface of the nozzle wall including the area of the cutouts. Evaluation of the obtained fibers by the glass fiber evaluation method confirmed that the obtained fibers were glass fibers each having an oblong cross section symmetrical about the longer axis and the shorter axis. The obtained fibers each had a longer axis length of 35.0 µm, a shorter axis length of 11.7 µm, and a flatness ratio of 3.0.

### Example 23

Glass fibers were drawn under the same conditions as in Example 22 except that the distance from the base plate to the distal end of the nozzle wall on the nozzle tip was 0.9 mm and the height of each cutout was 0.9 mm. The total area of the cutouts was 8.6 mm², which was 72% of the total area of the inner surface of the nozzle wall including the area of the cutouts. Evaluation of the obtained fibers by the glass fiber evaluation method confirmed that the obtained fibers were glass fibers each having an oblong cross section symmetrical about the longer axis and the shorter axis. The obtained fibers each had a longer axis length of 38.4 µm, a shorter axis length of 11.4 µm, and a flatness ratio of 3.4.

### Example 24

Glass fibers were drawn under the same conditions as in Example 22 except that the distance from the base plate to the distal end of the nozzle wall on the nozzle tip was 1.2 mm and the height of each cutout was 1.2 mm. The total area of the cutouts was 11.5 mm², which was 72% of the total area of the inner surface of the nozzle wall including the area of the cutouts. Evaluation of the obtained fibers by the glass fiber evaluation method confirmed that obtained fibers were glass fibers each having an oblong cross section symmetrical about the longer axis and the shorter axis. The obtained fibers each had a longer axis length of 38.1 µm, a shorter axis length of 10.9 µm, and a flatness ratio of 3.5.

### Example 25

Glass fibers were drawn at a drawing temperature of 1190°C using a nozzle having a structure in which the longer axis of the nozzle orifice in a horizontal cross section was 7.2 mm, the shorter axis thereof was 1.2 mm, the distance from the base plate to the distal end of the nozzle wall was 0.6 mm, the width of each cutout was 4.4 mm (61% of the longer axis of the nozzle orifice), and the height of each cutout was 0.6 mm. The total area of the cutouts was 5.3 mm², which was 56% of the total area of the inner surface of the nozzle wall including the area of the cutouts. Evaluation of the obtained fibers by the glass fiber evaluation method confirmed that the obtained fibers were glass fibers each having an oblong cross section symmetrical about the longer axis and the shorter axis. The obtained fibers each had a longer axis length of 45.6 µm, a shorter axis length of 12.3 µm, and a flatness ratio of 3.7.

### Example 26

Glass fibers were drawn under the same conditions as in Example 25 except that the width of each cutout in the nozzle tip was 5.4 mm (75% of the longer axis of the nozzle orifice). The total area of the cutouts was 6.5 mm², which was 68% of the total area of the inner surface of the nozzle wall including the area of the cutouts. Evaluation of the obtained fibers by the glass fiber evaluation method confirmed that the obtained fibers were glass fibers each having an oblong cross section symmetrical about the longer axis and the shorter axis. The obtained fibers each had a longer axis length of 48.2 µm, a shorter axis length of 13.8 µm, and a flatness ratio of 3.5.

### Example 27

Glass fibers were drawn under the same conditions as in Example 25 except that the longer axis of the nozzle orifice in a horizontal cross section was 8.4 mm, the shorter axis thereof was 1.2 mm, and the width of each cutout was 6.0 mm (71% of the longer axis of the nozzle orifice). The total area of the cutouts was 7.2 mm², which was 66% of the total area of the inner surface of the nozzle wall including the area of the cutouts. Evaluation of the obtained fibers by the glass fiber evaluation method confirmed that the obtained fibers were glass fibers each having an oblong cross section symmetrical about the longer axis and the shorter axis. The obtained fibers each had a longer axis length of 53.2 µm, a shorter axis length of 12.9 µm, and a flatness ratio of 4.1.

### Example 28

Glass fibers were drawn under the same conditions as in Example 25 except that the drawing temperature was 1160°C. Evaluation of the obtained fibers by the glass fiber evaluation method confirmed that the obtained fibers were glass fibers each having an oblong cross section symmetrical about the longer axis and the shorter axis. The obtained fibers each had a longer axis length of 37.7 µm, a shorter axis length of 9.5 µm, and a flatness ratio of 4.0.

### Example 29

Glass fibers were drawn under the same conditions as in Example 26 except that the drawing temperature was 1160°C. Evaluation of the obtained fibers by the glass fiber evaluation method confirmed that the obtained fibers were glass fibers each having an oblong cross section symmetrical about the longer axis and the shorter axis. The obtained fibers each had a longer axis length of 41.8 µm, a shorter axis length of 10.1 µm, and a flatness ratio of 4.1.

### Example 30

Glass fibers were drawn under the same conditions as in Example 27 except that the drawing temperature was 1160°C. Evaluation of the obtained fibers by the glass fiber evaluation method confirmed that the obtained fibers were glass fibers each having an oblong cross section symmetrical about the longer axis and the shorter axis. The obtained fibers each had a longer axis length of 43.4 µm, a shorter axis length of 9.2 µm, and a flatness ratio of 4.7.

### Comparative Example 1

Glass fibers were drawn at 1190°C using a nozzle having a structure in which the distance from the base plate to the distal end of the nozzle wall on the nozzle tip was 3.0 mm, the width of each cutout was 2.0 mm (42% of the longer axis of the nozzle orifice), and the height of each cutout was 1.8 mm (60% of the distance from the base plate to the distal end of the nozzle wall). At a glass fiber pulling angle of 0°, glass fibers each having an oblong cross section with a flatness ratio of 4.1 were obtained. However, drawing at a pulling angle of 1.5° in the lengthwise direction of the nozzle caused a decrease in flatness ratio by 10% and produced fibers each being asymmetrical about the shorter axis. Drawing at a pulling angle of 6° in the lengthwise direction of the nozzle resulted in a further decrease in flatness ratio by 17%. This nozzle shape was found to easily cause a decrease in flatness ratio of a fiber when the fiber is pulled at an angle in the lengthwise direction of the nozzle and easily cause the cross-sectional shape of the fibers to vary.

### Comparative Example 2

Glass fibers were drawn under the same conditions as in Example 1 except that the distance from the base plate to the distal end of the nozzle wall on the nozzle tip was 1.0 mm, the width of each cutout was 2.0 mm (42% of the longer axis of the nozzle orifice), and the height of each cutout was 0.6 mm (60% of the distance from the base plate to the distal end of the nozzle wall).

Evaluation of the obtained fibers by the glass fiber evaluation method showed that the fibers each had a longer axis length of 20.1 µm, a shorter axis length of 8.8 µm, and a flatness ratio of 2.3, meaning that sufficiently flattened fibers were not obtained.

### Comparative Example 3

Glass fibers were obtained using the nozzle tip described in Comparative Example 1 at drawing temperatures of 1170°C, 1190°C, 1210°C, and 1230°C. At a drawing temperature of 1190°C, glass fibers having a flatness ratio as high as 4.2 were obtained. When the drawing temperature was increased to 1210°C, the obtained glass fibers had a slightly decreased flatness ratio of 3.6. When the drawing temperature was further increased to 1230°C, the obtained glass fibers had a significantly decreased flatness ratio of 2.1. At a drawing temperature of 1170°C, the glass fibers came apart and thus the drawing was not possible. This nozzle shape was found to provide a narrow temperature range producing glass fibers having a high flatness ratio, and easily cause the cross-sectional shape of the fibers to vary due to the temperature unevenness in the base plate.

The following Tables 1 to 17 summarize the results of the examples and comparative examples.

**[Table 1]**

| | Example 1 | Example 2 | Example 3 | Example 4 |
|---|---|---|---|---|
| Nozzle shape | 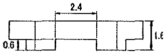 | Same as in Example 1 | 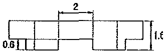 | Same as in Example 1 |
| | 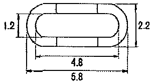 | | 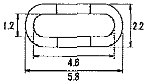 | |
| Base plate temperature/°C | 1200 | 1180 | 1200 | 1200 |
| Fiber pulling angle | 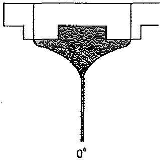 | 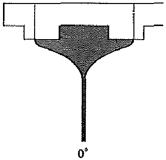 | 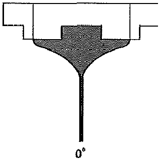 | 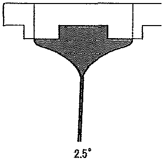 |
| Drawability | Good | Good | Good | Good |
| Fiber longer axis/µm | 30.0 | 25.6 | 28.2 | 27.7 |
| Fiber shorter axis/µm | 9.4 | 7.4 | 7.7 | 8.1 |
| Flatness ratio | 3.2 | 3.5 | 3.7 | 3.4 |
| Standard deviation of flatness ratio | 2.9% | 6.4% | 3.8% | 5.5% |

**[Table 2]**

| | Example 5 | Example 6 | Example 7 | Example 8 |
|---|---|---|---|---|
| Nozzle shape | Same as in Example 1 | Same as in Example 1 | Same as in Example 3 | Same as in Example 3 |
| Base plate temperature/°C | 1200 | 1210 | 1210 | 1180 |
| Fiber pulling angle | 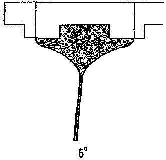 | 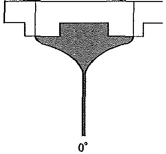 | 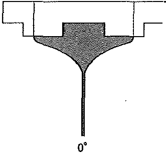 | 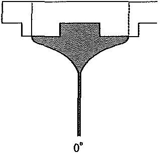 |
| Drawability | Good | Good | Good | Good |
| Fiber longer axis/µm | 24.3 | 28.8 | 26.9 | 24.2 |
| Fiber shorter axis/µm | 8.1 | 9.4 | 8.8 | 7.6 |
| Flatness ratio | 3.0 | 3.1 | 3.1 | 3.2 |
| Standard deviation of flatness ratio | 7.5% | 5.4% | 3.2% | 5.7% |

**[Table 3]**

| | Example 9 |
|---|---|
| Nozzle shape | 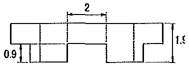 |
| | 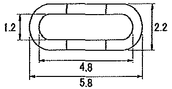 |
| Base plate temperature/°C | 1200 |
| Fiber pulling angle | 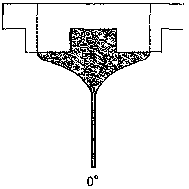 |
| Drawability | Good |
| Fiber longer axis/µm | 25.4 |
| Fiber shorter axis/µm | 8.8 |
| Flatness ratio | 2.9 |
| Standard deviation of flatness ratio | 5.9% |

**[Table 4]**

| | Example 10 | | |
|---|---|---|---|
| Nozzle shape | 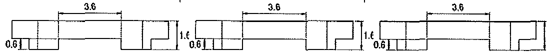 | | |
| | 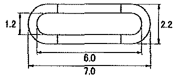 | 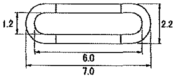 | 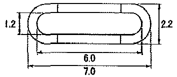 |
| Base plate temperature/°C | 1200 | 1200 | 1200 |
| Fiber pulling angle | 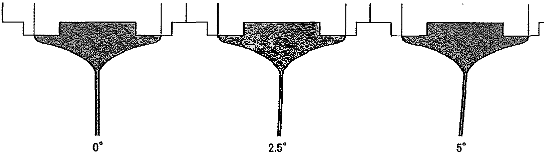 | | |
| Drawability | Good | Good | Good |
| Fiber longer axis/µm | 39.4 | 44.0 | 44.5 |
| Fiber shorter axis/µm | 9.6 | 10.2 | 10.3 |
| Flatness ratio | 4.1 | 4.3 | 4.3 |

**[Table 5]**

| | Example 11 | | |
|---|---|---|---|
| Nozzle shape | 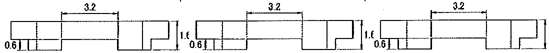 | | |
| | 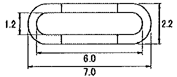 | 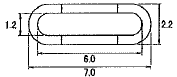 | 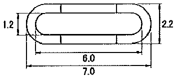 |
| Base plate temperature/°C | 1160 | 1160 | 1160 |
| Fiber pulling angle | 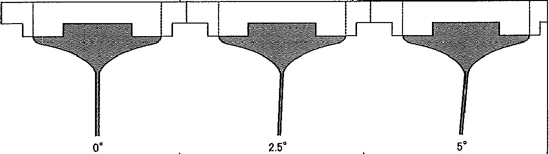 | | |
| Drawability | Good | Good | Good |
| Fiber longer axis/µm | 39.0 | 40.0 | 36.6 |
| Fiber shorter axis/µm | 8.9 | 9.0 | 8.8 |
| Flatness ratio | 4.4 | 4.4 | 4.2 |

**[Table 6]**

| | Example 12 | | |
|---|---|---|---|
| Nozzle shape | Same as in Example 10 | | |
| Base plate temperature/°C | 1160 | 1180 | 1200 |
| Fiber pulling angle | 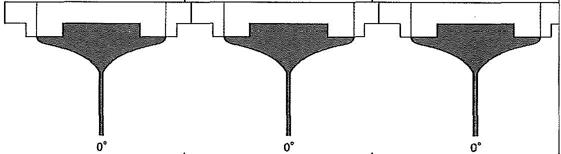 | | |
| Drawability | Good | Good | Good |
| Fiber longer axis/µm | 35.1 | 40.6 | 39.4 |
| Fiber shorter axis/µm | 8.7 | 9.2 | 9.6 |
| Flatness ratio | 4.1 | 4.4 | 4.1 |

**[Table 7]**

| | Example 13 | | | |
|---|---|---|---|---|
| Nozzle shape | Same as in Example 11 | | | |
| Base plate temperature/°C | 1140 | 1160 | 1180 | 1200 |
| Fiber pulling angle | 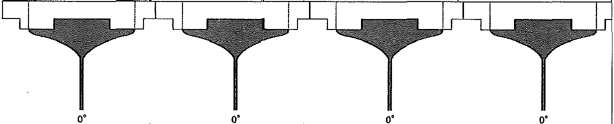 | | | |
| Drawability | Good | Good | Good | Good |
| Fiber longer axis/µm | 35.3 | 39.0 | 40.7 | 42.0 |
| Fiber shorter axis/µm | 9.1 | 8.9 | 10.1 | 11.7 |
| Flatness ratio | 3.9 | 4.4 | 4.0 | 3.6 |

**[Table 8]**

| | Example 14 | | |
|---|---|---|---|
| Nozzle shape | 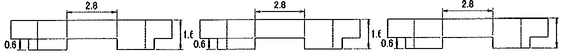 | | |
| | 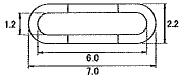 | 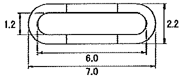 | 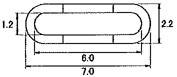 |
| Base plate temperature/°C | 1180 | 1180 | 1180 |
| Fiber pulling angle | 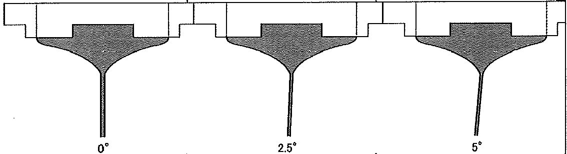 | | |
| Drawability | Good | Good | Good |
| Fiber longer axis/µm | 39.6 | 40.4 | 35.6 |
| Fiber shorter axis/µm | 10.0 | 10.3 | 10.5 |
| Flatness ratio | 4.0 | 3.9 | 3.4 |

**[Table 9]**

| | Example 15 | | |
|---|---|---|---|
| Nozzle shape | 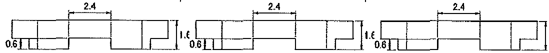 | | |
| | 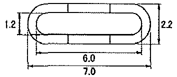 | 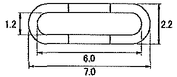 | 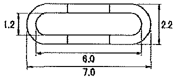 |
| Base plate temperature/°C | 1180 | 1180 | 1180 |
| Fiber pulling angle | | | |
| | 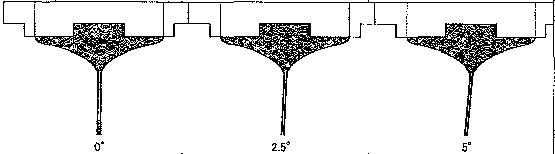 | | |
| Drawability | Good | Good | Good |
| Fiber longer axis/µm | 40.6 | 41.6 | 43.1 |
| Fiber shorter axis/µm | 10.7 | 11.3 | 11.4 |
| Flatness ratio | 3.8 | 3.7 | 3.8 |

**[Table 10]**

| | Example 16 | | |
|---|---|---|---|
| Nozzle shape | Sample as in Example 14 | | |
| Base plate temperature/°C | 1160 | 1180 | 1200 |
| Fiber pulling angle | 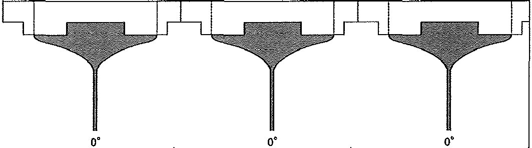 | | |
| Drawability | Good | Good | Good |
| Fiber longer axis/µm | 38.7 | 39.6 | 40.7 |
| Fiber shorter axis/µm | 9.0 | 10.0 | 10.8 |
| Flatness ratio | 4.3 | 4.0 | 3.8 |

**[Table 11]**

| | Example 17 | Example 18 |
|---|---|---|
| Nozzle shape | 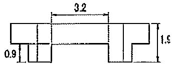 | 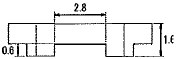 |
| | 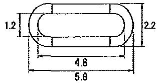 | 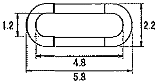 |
| Base plate temperature/°C | 1200 | 1200 |
| Fiber pulling angle | 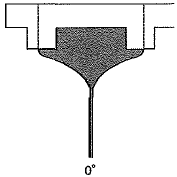 | 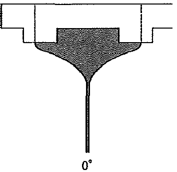 |
| Drawability | Good | Good |
| Fiber longer axis/µm | 31.2 | 32.4 |
| Fiber shorter axis/µm | 8.6 | 9.0 |
| Flatness ratio | 3.7 | 3.6 |

**[Table 12]**

| | Example 19 | Example 20 | Example 21 |
|---|---|---|---|
| Nozzle shape | Same as in Example 10 | Same as in Example 10 | Same as in Example 10 |
| Base plate temperature/°C | 1190 | 1170 | 1170 |
| Winding speed/m/min | 1629 | 2108 | 2683 |
| Number of bundled fibers | 36 | 192 | 192 |
| Drawability | Good | Good | Good |
| Fiber longer axis/µm | 28.2 | 26.1 | 22.3 |
| Fiber shorter axis/µm | 7.4 | 6.6 | 5.4 |
| Flatness ratio | 3.8 | 4.1 | 4.2 |
| Standard deviation of flatness ratio | 9.2% | 12.7% | 10.5% |
| Fiber cross-sectional area/µm² | 199.5 | 163.8 | 133.9 |
| Standard deviation of cross-sectional area | 8.7% | 12.0% | 13.7% |

**[Table 13]**

| | Example 22 | Example 23 | Example 24 |
|---|---|---|---|
| Nozzle shape | 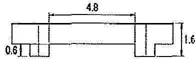 | 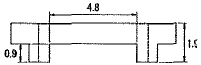 | 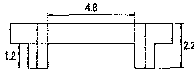 |
| | 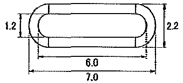 | 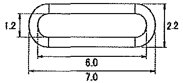 | 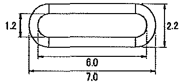 |
| Base plate temperature/°C | 1190 | 1190 | 1190 |
| Fiber pulling angle | 0° | 0° | 0° |
| Drawability | Good | Good | Good |
| Fiber longer axis/µm | 35.0 | 38.4 | 38.1 |
| Fiber shorter axis/µm | 11.7 | 11.4 | 10.9 |
| Flatness ratio | 3.0 | 3.4 | 3.5 |

**[Table 14]**

| | Example 25 | Example 26 | Example 27 |
|---|---|---|---|
| Nozzle shape | 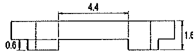 | 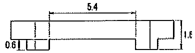 | 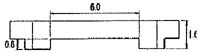 |
| | 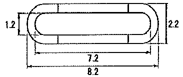 | 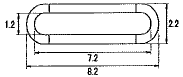 | 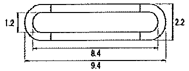 |
| Base plate temperature/°C | 1190 | 1190 | 1190 |
| Fiber pulling angle | 0° | 0° | 0° |
| Drawability | Good | Good | Good |
| Fiber longer axis/µm | 45.6 | 48.2 | 53.2 |
| Fiber shorter axis/µm | 12.3 | 13.8 | 12.9 |
| Flatness ratio | 3.7 | 3.5 | 4.1 |

**[Table 15]**

| | Example 28 | Example 29 | Example 30 |
|---|---|---|---|
| Nozzle shape | Same as in Example 25 | Same as in Example 26 | Same as in Example 27 |
| Base plate temperature/°C | 1160 | 1160 | 1160 |
| Fiber pulling angle | 0° | 0° | 0° |
| Drawability | Good | Good | Good |
| Fiber longer axis/µm | 37.7 | 41.8 | 43.4 |
| Fiber shorter axis/µm | 9.5 | 10.1 | 9.2 |
| Flatness ratio | 4.0 | 4.1 | 4.7 |

**[Table 16]**

| | Comparative Example 1 | | | Comparative Example 2 |
|---|---|---|---|---|
| Nozzle shape | 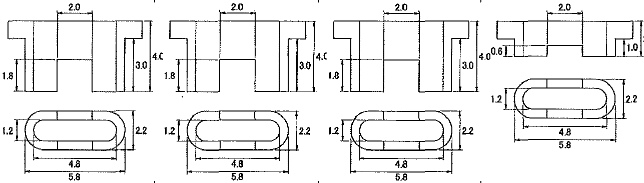 | | | |
| Base plate temperature/°C | 1190 | 1190 | 1190 | 1200 |
| Fiber pulling angle | 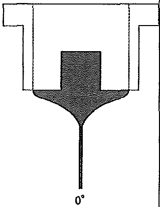 | 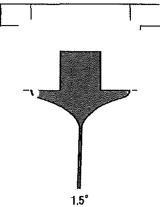 | 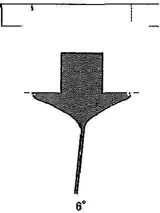 | 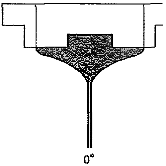 |
| Drawability | Good | Good | Good | Good |
| Fiber longer axis/µm | 29.5 | 27.4 | 24.4 | 20.1 |
| Fiber shorter axis/µm | 6.5 | 6.6 | 7.5 | 8.8 |
| Flatness ratio | 4.1 | 3.7 | 3.0 | 2.3 |
| Standard deviation of flatness ratio | 2.5% | 4.4% | 2.4% | - |

**[Table 17]**

| | Comparative Example 3 | | | |
|---|---|---|---|---|
| Nozzle shape | Same as in Comparative Example 1 | | | |
| Base plate temperature/°C | 1170 | 1190 | 1210 | 1230 |
| Fiber pulling angle | 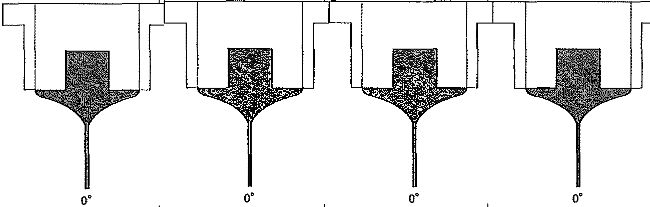 | | | |
| Drawability | Poor | Good | Good | Good |
| Fiber longer axis/µm | - | 32.2 | 36.7 | 20.5 |
| Fiber shorter axis/µm | - | 7.7 | 10.2 | 9.6 |
| Flatness ratio | - | 4.2 | 3.6 | 2.1 |

### REFERENCE SIGNS LIST

1, 1A, 1B bushing
10 base plate
11 base orifice
20 nozzle
21 nozzle wall
22 nozzle orifice
23 cutout
24 inclined surface
30 cooling fin
40 terminal
50 winder
51 applicator
52 gathering shoe
100 device for producing glass fibers
GF glass fiber
GM glass melts
GS glass fiber strand
A thickness of base plate
B distance from base plate to distal end of nozzle wall
H height of cutout
W width of cutout
X1 length of longitudinal center axis of nozzle orifice
X2 length of longest portion of nozzle orifice in short length direction

## Claims

1. A bushing for producing glass fibers, comprising:
a base plate; and
nozzles arranged on the base plate and each configured to discharge glass melts,
the base plate comprising base orifices each having a horizontally flat cross section,
each of the nozzles comprising a nozzle wall projecting from the base plate along an outline of a corresponding base orifice, and a nozzle orifice that penetrates the nozzle from the base orifice to a distal end of the nozzle wall while keeping a shape of the base orifice,
the nozzle wall comprising a pair of cutouts that do not project from the base plate,
the cutouts opposing each other with a longitudinal center axis of the nozzle orifice in between,
a width of each of the cutouts being 10% or more and 95% or less of a length of the longitudinal center axis of the nozzle orifice.

2. A bushing for producing glass fibers, comprising:
a base plate; and
nozzles arranged on the base plate and each configured to discharge glass melts,
the base plate comprising base orifices each having a horizontally flat cross section,
each of the nozzles comprising a nozzle wall projecting from the base plate along an outline of a corresponding base orifice, and a nozzle orifice that penetrates the nozzle from the base orifice to a distal end of the nozzle wall while keeping a shape of the base orifice,
the nozzle wall comprising a pair of cutouts in distal end portions,
the cutouts opposing each other with a longitudinal center axis of the nozzle orifice in between,
a width of each of the cutouts being 10% or more and 95% or less of a length of the longitudinal center axis of the nozzle orifice,
a height of each of the cutouts being more than 80% and less than 100% of a distance from the base plate to the distal end of the nozzle wall.

3. The bushing according to claim 1 or 2, wherein the cutouts oppose each other with a center of the longitudinal center axis of the nozzle orifice in between.

4. The bushing according to any one of claims 1 to 3,
wherein a total area of the cutouts in terms of portions defined by an inner surface of the nozzle wall is 1% or more and 80% or less of a total area of the inner surface of the nozzle wall including the total area of the cutouts.

5. The bushing according to any one of claims 1 to 4,
wherein each of the cutouts has a rectangular shape.

6. The bushing according to any one of claims 1 to 5,
wherein the nozzle orifice has a ratio (length of longitudinal center axis)/(length of longest portion in short length direction) of 2 or more and 12 or less.

7. The bushing according to any one of claims 1 to 6,
wherein a ratio B/A of a distance B from the base plate to the distal end of the nozzle wall to a thickness A of the base plate is 0.2 or more and 4 or less.

8. The bushing according to claim 7,
wherein the ratio B/A is 0.2 or more and 1 or less.

9. The bushing according to any one of claims 1 to 8,
wherein a cross-sectional area of the base orifice is the same as a cross-sectional area of an end of the nozzle orifice.

10. The bushing according to any one of claims 1 to 9,
wherein a cross-sectional shape of the base orifice is the same as a cross-sectional shape of the nozzle orifice.

11. A method of producing glass fibers each having a flat cross section symmetrical about a longitudinal center axis, the method comprising
drawing glass melts from each of the nozzles of the bushing according to any one of claims 1 to 10, and quenching the glass melts for fiber formation.

12. A method of producing a glass fiber strand, comprising
obtaining glass fibers by the production method according to claim 11, and
•bundling the glass fibers.

13. A glass fiber strand comprising bundled glass fibers each having a flat cross section symmetrical about a longitudinal center axis,
wherein an average flatness ratio of cross-sectional shapes of the glass fibers is 2 or more and 8 or less and a standard deviation of the flatness ratio of the cross-sectional shapes of the glass fibers is 14% or less.

14. A glass fiber strand comprising bundled glass fibers each having a flat cross section symmetrical about a longitudinal center axis,
wherein a standard deviation of cross-sectional areas of the glass fibers is 14% or less.

15. The glass fiber strand according to claim 14,
wherein an average flatness ratio of cross-sectional shapes of the glass fibers is 2 or more and 8 or less.
